(19) Europäisches Patentamt
European Patent Office
Office européen des brevets

(11) **EP 1 793 525 B1**

(12) **EUROPÄISCHE PATENTSCHRIFT**

(45) Veröffentlichungstag und Bekanntmachung des Hinweises auf die Patenterteilung:
**15.10.2008   Patentblatt 2008/42**

(51) Int Cl.:
*H04L 9/08* *(2006.01)*

(21) Anmeldenummer: **05026208.8**

(22) Anmeldetag: **01.12.2005**

(54) **Verfahren zum Ändern eines Gruppenschlüssels in einer Gruppe von Netzelementen in einem Netz**

Method for changing the group key in a group of network elements in a network

Procédé pour changer la clé de groupe dans un groupe d'éléments de réseau dans un réseau

(84) Benannte Vertragsstaaten:
**AT BE BG CH CY CZ DE DK EE ES FI FR GB GR HU IE IS IT LI LT LU LV MC NL PL PT RO SE SI SK TR**

(43) Veröffentlichungstag der Anmeldung:
**06.06.2007   Patentblatt 2007/23**

(73) Patentinhaber: **BRAVIS GmbH**
**03044 Cottbus (DE)**

(72) Erfinder:
• **König, Hartmut, Prof. Dr.-Ing.**
**01069 Dresden (DE)**
• **Liu, Fuwen, Dipl.-Ing.**
**03046 Cottbus (DE)**

(74) Vertreter: **Bittner, Thomas L.**
**Forrester & Boehmert**
**Pettenkoferstrasse 20-22**
**80336 München (DE)**

(56) Entgegenhaltungen:
**EP-A- 1 501 237          US-B1- 6 941 457**

• **FUWEN LIU ET AL: "Efficient key distribution for closed meetings in the Internet" INTERNATIONAL CONFERENCE FOR COMMUNICATIONS AND MULTIMEDIA SECURITY. 9TH IFIP-TC-6 TC-11, CMS 2005, 19-21 SEPT. 2005, PROCEEDINGS (LECTURE NOTES IN COMPUTER SCIENCE VOL. 3677) SPRINGER-VERLAG BERLIN, GERMANY, 2005, Seiten 271-272, XP002378847 ISBN: 3-540-28791-4**

EP 1 793 525 B1

**Beschreibung**

Die Erfindung betrifft ein Verfahren zum Ändern eines Gruppenschlüssels in einer Gruppe von Netzelementen in einem Netzwerksystem.

Hintergrund der Erfindung

Moderne gruppenorientierte und kollaborative Applikationen für den Datenaustausch zwischen Netzelementen einer Gruppe von Netzelementen in einem Netzwerksystem nutzen verstärkt das Peer-to-Peer-Prinzip. Dieses bietet gegenüber zentralistischen Ansätzen die der Client-Server-Konfiguration den Vorteil einer größeren Unabhängigkeit von einer möglicherweise teueren Infrastruktur, wie sie beispielsweise für Audio- und Videokonferenzen mit H.32x-Systemen existiert. Dezentrale Systeme haben sich hier als flexibler erwiesen, da es keinen Einzelfehlerpunkt *("Single Point of Failure")* gibt und sich die Abhängigkeit von einer Infrastruktur vermindert. Dezentrale Lösungen unterstützen insbesondere den spontanen Datenaustausch und die Mobilität der Nutzer der Netzelemente. Dieses ist beispielsweise für die geschäftliche Kommunikation über das Internet von Vorteil.

Dezentrale Konfigurationen benötigen jedoch Mechanismen, um die Vertraulichkeit der ausgetauschten Daten sicherzustellen. Dieses erfordert insbesondere Verfahren für den Austausch von Schlüsseln, die zum Verschlüsseln / Entschlüsseln der ausgetauschten Daten verwendet werden, wobei das Verfahren zum Schlüsselaustausch eine konsistente Erneuerung der Schlüssel bei allen an einer Gruppe von Netzelementen beteiligten Netzelementen sichern muß. Während für zentralistische Ansätze praktikable Lösungen existieren, ist die Entwicklung effizienter und sicherer Verfahren für verteilte Konfigurationen Gegenstand intensiver Forschung.

Ein sicherer Datenaustausch innerhalb einer Gruppe von Netzelementen erfordert, daß nur aktiv teilnehmende Netzelemente über einen aktuellen Gruppen- oder Sitzungsschlüssel für das Verschlüsseln / Entschlüsseln der ausgetauschten Datenteile verfügen. Bei einer sich ändernden Gruppenzusammensetzung, das heißt dem Hinzutreten eines weiteren Netzelementes zu der Gruppe oder wenn ein Netzelement die Gruppe verläßt, kann es darüber hinaus gewünscht und gefordert sein, daß Inhalt und Gegenstand einer Beratung zwischen Nutzern der Netzelemente hinzutretenden Benutzern, die später beitreten oder die Beratung eher verlassen, nicht zugänglich werden. Im folgenden wird diese komplexere Variante einer vertraulichen Beratung betrachtet. Varianten mit geringeren Vertraulichkeitsanforderungen an eine sich verändernde Zusammensetzung der Gruppe von Netzelementen können hieraus abgeleitet werden.

An ein Schlüsselmanagement in einer solchen Gruppe von Netzelementen werden eine Reihe unterschiedlicher Anforderungen gestellt. (1) Jedes Netzelement der Gruppe hat sicherzustellen, daß niemand außerhalb der Gruppe Zugang zu dem Gruppenschlüssel bekommen kann *("key authentication")*. Voraussetzung hierfür ist eine gegenseitige Authentifizierung jedes Netzelementes beim Hinzutreten des Netzelementes zu der Gruppe, die sicherstellt, daß das hinzutretende Netzelement auch das von der Gruppe von Netzelementen erwartete Netzelement ist, und umgekehrt dem hinzutretenden Netzelement bzw. dessen Benutzer die Gewissheit gibt, daß er der Gruppe vertrauen kann. (2) Ein Netzelement, welches die Sitzung zu irgendeinem Zeitpunkt verläßt, soll keinen Zugang zu einem später generierten Schlüssel für den Datenaustausch zwischen den Netzelementen bekommen, um die weitere Kommunikation zu entschlüsseln *("forward confidentiality")*. (3) Netzelemente, die einer Sitzung später beitreten, sollen keinen Zugang zu einem früher genutzten Schlüssel erhalten, um Daten offenzulegen, die vor dem Beitritt zwischen den Netzelementen der Gruppe ausgetauscht wurden. (4) Keiner der die Gruppe von Netzelementen verlassenden Netzelemente soll in der Lage sein, einen aktuell genutzten Schlüssel unter Ausnutzung älterer Schlüssel abzuleiten *("collusion freedom")*.

Weiterhin ist es wünschenswert, daß eine Kompromitierung eines Schlüssel nicht zur Auf deckung früherer Schlüssel führt *("perfect forward secrecy")* und daß die Aufdeckung von Schlüsseln früherer Sitzungen nicht zur Kompromitierung des aktuellen Schlüssels führen kann *("resistance to known key attacks")*. Fast selbstverständlich erscheint die Forderung nach einem effizienten Austauschprotokoll für die Schlüssel, um Interferenzzeiten in dem Datenaustausch für die Schlüsselerneuerung, insbesondere für Echtzeit-Anwendungen wie Audio- und Videokonferenzen zu minimieren, da im asynchronen Internet Hosts in der Regel nicht in der Lage sind, die Schlüssel synchron zu erneuern.

Es werden grundsätzlich zwei Arten von Schlüsselaustauschprotokollen in Gruppen von Netzelementen unterschieden, nämlich die Schlüsselvereinbarungsprotokolle *("key agreement protocols")* und die Schlüsselverteilungsprotokolle *("key distribution protocols")*. Die beiden Protokollarten unterscheiden sich in der Art der Schlüsselerneuerung, das heißt hinsichtlich des Verfahrens der Ablösung eines bisher genutzten Schlüssels durch einen neuen Schlüssel für das Verschlüsseln / Entschlüsseln der ausgetauschten Daten.

Schlüsselvereinbarungsprotokolle basieren auf dem Diffie-Hellman-Schlüsselaustauschprinzip (vgl. E. Rescorla: Diffie-Hellman Key Agreement Method. RFC 2631, Juni 1999). Das Grundprinzip besteht darin, daß jedes Netzelement der Gruppe von Netzelementen einen Beitrag zur Schlüsselerzeugung leisten muß. Hierzu wird ein Netzelement aus der Gruppe von Netzelementen ausgewählt, welches einen Zwischenschlüssel generiert, der dann an die verbleibenden Mitglieder der Gruppe von Netzelementen verteilt wird. Aus den Zwischenschlüsseln und ihrem eigenen Beitrag erzeugen die verbleibenden Netzelemente dann einen Gruppenschlüssel. Bekannte Beispiele für diese Art von Schlüsselaustauschprotokollen sind CLIQUES (vgl. M. Steiner et al.: CLIQUES: A new approach to group key agreement. IEEE International Conference on Distributed Computing Systems, 1998, S. 380-397) und TGDH (vgl. Y. Kim et al.: Simple and fault-tolerant key agreement for dynamic collaborative groups. In S. Jajodia (ed.): 7th ACM Conference on Computer and Communications Security, Athens, Greece, Nov. 2000, ACM Press, S. 235-244). Letzteres wird gegenwärtig als sehr effizientes Schlüsselvereinbarungsprotokoll angesehen.

Im Gegensatz hierzu bestimmen Schlüsselverteilungsprotokolle dynamisch eines der Netzelemente, welches den neuen Schlüssel erzeugt und diesen sicher an die verbleibenden Netzelemente der Gruppe verteilt. Die meisten Ansätze verwenden einen Schlüsselverteilungsbaum. Sie unterscheiden sich dadurch, wie die Netzelemente der Gruppe den Schlüssel über den Schlüsselverteilungsbaum erhalten. Beispiele für solche Schlüsselverteilungsprotokolle sind DTKM (vgl. L. Dondeti et al.: Disec: A distributed framework for scalable secure manyto-many communication, Proceedings of The Fifth IEEE Symposium on Computers and Communications (ISCC 2000), Juli 2000) und ein von Rodeh et al. vorgeschlagener Verteilungsbaum (vgl. O. Rodeh et al.: Optimized Group Rekey for Group Communications Systems. In Symposium Network and Distri-buted System Security (NDSS), San Diego, California, Feb. 2000, S. 39-48), bei dem es sich um eine Erweiterung einer zentralisierten logischen Schlüsselhierarchie handelt (vgl. C. Wong et al.: Secure group communication using key graphs, IEEE/ACM Transaction on Networking 8 (1) 16-30, 2000).

Schlüsselverteilungsprotokolle gelten als effizienter, weil sie insgesamt einen geringeren Rechen- und Kommunikationsaufwand für das Erzeugen und das Verteilen des Schlüssels benötigen.

Aus der Veröffentlichung von Fuwen Liu et al. ("Efficient key distribution for closed meetings in the internet", International Conference for Communications and Multimedia Security; (CMS 2005, 19. bis 21. September 2005, Proceedings (Lecture Notes in Computer Science Vol. 3677), Springer-Verlag Berlin, 2005) ist ein Verfahren zum Ändern eines Gruppenschlüssels in einer Gruppe von Netzelementen in einem Netzwerksystem mit einer geschlossenen Peer-to-Peer-Konfiguration bekannt, bei dem ein effizientes und zuverlässiges Erzeugen und Verteilen von Schlüsseln gewährleistet ist, die zum Verschlüsseln / Entschlüsseln der in der Gruppe ausgetauschten Daten nutzbar sind.

## Zusammenfassung der Erfindung

Aufgabe der Erfindung ist es, ein Verfahren zum Ändern eines Gruppenschlüssels in einer Gruppe von Netzelementen in einem Netzwerksystem mit einer geschlossenen Peer-to-Peer-Konfiguration zu schaffen, bei dem ein effizientes und zuverlässiges Erzeugen und Verteilen von Schlüsseln gewährleistet ist, die zum Verschlüsseln / Entschlüsseln der in der Gruppe ausgetauschten Daten nutzbar sind.

Diese Aufgabe wird erfindungsgemäß durch ein Verfahren nach dem unabhängigen Anspruch 1 gelöst. Vorteilhafte Ausgestaltungen der Erfindung sind Gegenstand von abhängigen Unteransprüchen.

Mit Hilfe des vorgeschlagenen Verfahrens wird beim Ändern der Zusammensetzung der Gruppe von Netzelementen ein neuer Gruppenschlüssel für die Verschlüsselung von auszutauschenden Daten auf sichere und zugleich effiziente Weise erzeugt und anschließend an die übrigen Mitglieder der Gruppe von Netzelementen verteilt. Das Verfahren gewährleistet einerseits einen hohen Sicherheitsstandard, indem die eingangs erläuterten Sicherheitsanforderungen erfüllt sind, und minimiert andererseits den Rechenaufwand bei der Gruppenschlüsselerneuerung.

Eine bevorzugte Ausgestaltung der Erfindung sieht vor, daß bei der Gruppenschlüsselerneuerung das ausgewählte Netzelement $P_i^*$ bestimmt wird, indem unter Verwendung eines Token-Protokolls ein virtueller Token an ein Netzelement $P_i$ mit $1 \leq i \leq n$ aus der Gruppe von Netzelementen $P_1 \dots P_n$ vergeben wird und so das Netzelement $P_i$ zu einem Tokenhalter $PT$ wird. Mittels Nutzung eines virtuellen Tokens werden eine explizite Tokenweitergabe und alle hiermit verbundenen Probleme wie Tokenverlust und -dopplung vermieden.

Eine vorteilhafte Ausgestaltung der Erfindung sieht vor, daß bei der Gruppenschlüsselerneuerung das ausgewählte Netzelement $P_i^*$ bestimmt wird, indem unter Verwendung eines Token-Protokolls ein physischer Token an ein Netzelement $P_i$ mit $1 \leq i \leq n$ aus der Gruppe von Netzelementen $P_1 \dots P_n$ vergeben wird und so das Netzelement $P_i$ zu einem Tokenhalter $PT$ wird.

Bei einer zweckmäßigen Ausführungsform der Erfindung ist vorgesehen, daß die Tokenvergabe für weitere Gruppenschlüsselerneuerungen jeweils erneut durchgeführt wird, wodurch der Sicherheitsstandard weiter erhöht wird.

Eine vorteilhafte Weiterbildung der Erfindung sieht vor, daß bei Verwendung des virtuellen Tokens der Tokenhalter $PT$ aus der Gruppe von Netzelementen $P_1 \dots P_n$ gemäß der folgenden Beziehung ermittelt wird

$$PT = VK \bmod n,$$

wobei VK einen Zahlenwert für eine Versionsnummer des bei der Gruppenschlüsselerneuerung erzeugten neuen Gruppenschlüssels $GK_{neu}$ bezeichnet und bei jeder Gruppenschlüsselerneuerung um den Wert 1 erhöht wird.

Die Authentifizierung des neuen Netzelementes $P_{n+1}$ wird bevorzugt durch das ausgewählte Netzelement $P_i^*$

ausgeführt. Zweckmäßigerweise wird bei einer Ausführungsform der Erfindung die Authentifizierung des neuen Netzelementes $P_{n+1}$ mittels digitaler Signatur ausgeführt.

Bevorzugt sieht eine Ausführungsform der Erfindung vor, daß bei erfolgreicher Authentifizierung das ausgewählte Netzelement $P_i^*$ für alle übrigen Netzelemente $P_k$ der Gruppe von Netzelementen $P_1 ... P_n$ einen jeweiligen öffentlichen Diffie-Hellman-Wert $g^i$ mit $1 \leq i \leq n$ an das neue Netzelement $P_{n+1}$ übergibt und daß das neue Netzelement $P_{n+1}$ seinen öffentlichen Diffie-Hellman-Wert $g^{n+1}$ an das ausgewählte Netzelement $P_i^*$ übergibt, welches seinerseits den öffentlichen Diffie-Hellman-Wert $g^{n+1}$ des neuen Netzelementes $P_{n+1}$ an alle übrigen Netzelemente $P_k$ der Gruppe von Netzelementen $P_1 .... P_n$ übergibt.

Zweckmäßig sieht eine Fortbildung der Erfindung vor, daß beim Verlassen eines Netzelementes $P_v$ der Gruppe von Netzelementen $P_1 ... P_n$ eine Gruppenschlüsselerneuerung in analoger Weise wie beim Hinzutreten des neuen Netzelementes $P_{n+1}$ durchgeführt wird.

Bei einer bevorzugten Weiterbildung der Erfindung ist vorgesehen, daß beim Verlassen des Netzelementes $P_v$ alle übrigen Netzelemente $P_x$ mit $1 < x \leq n, x \neq v$ der Gruppe von Netzelementen $P_1 ... P_n$ in der geänderten Zusammensetzung jeweils einen öffentlichen Diffie-Hellman-Wert $g^v$ des die Gruppe von Netzelementen $P_1 ... P_n$ verlassenden Netzelementes $Pv$ löschen.

Eine Ausgestaltung der Erfindung sieht vor, daß der neue Gruppenschlüssel $GK_{neu}$ bei einer Datenkommunikation zwischen den mehreren Netzelementen $P_i$ in dem Netzwerksystem zum Austauschen von Video- und / oder Audio- und / oder Textdaten verwendet wird.

Beschreibung bevorzugter Ausführungsbeispiele der Erfindung

Die Erfindung wird im folgenden anhand von Ausführungsbeispielen unter Bezugnahme auf eine Zeichnung näher erläutert. Hierbei zeigen:

Fig. 1      eine schematische Darstellung einer Systemarchitektur eines Netzwerksystems;
Fig. 2      eine schematische Darstellung zur Erläuterung eines Verfahrens im Rahmen einer Schlüsselerneuerung;
Fig. 3      eine schematische Darstellung zur Erläuterung eines Hinzutretens eines neuen Netzelementes zu einer Gruppe von Netzelementen;
Fig. 4      eine schematische Darstellung zur Erläuterung einer Prozedur, wenn ein Netzelement die Gruppe von Netzelementen verläßt;
Fig. 5      eine grafische Darstellung zum Vergleichen der Verzögerung bei der Schlüsselerneuerung in Abhängigkeit von der Größe der Gruppe von Netzelementen für verschiedene Verfahren; und
Fig. 6      eine grafische Darstellung zum Vergleichen der Verzögerung bei der Schlüsselerneuerung für verschiedene Verfahren, wenn ein Netzelement die Gruppe von Netzelementen verläßt.

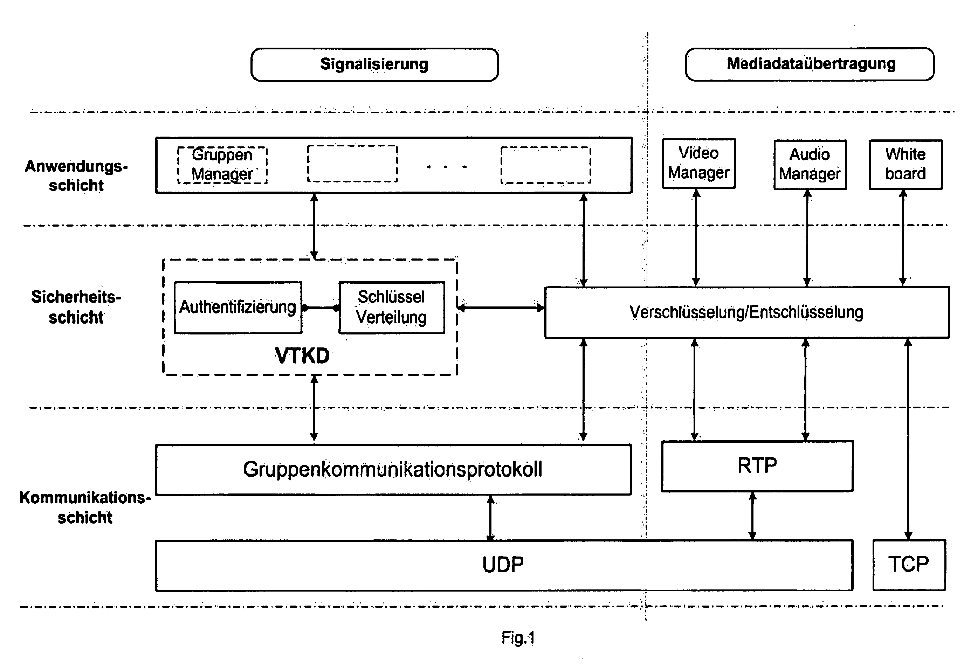

Im folgenden wird ein Verfahren zum Ändern eines Gruppenschlüssels in einer Gruppe von Netzelementen $P_1 ... P_n$ ($n = 2, 3, ...$) in einem Netzwerksystem mit einer geschlossenen Peer-to-Peer-Konfiguration unter Bezugnahme auf die Fig. 1 bis 6 erläutert. Hierbei wird insbesondere ein Verteilungsverfahren im Zusammenhang mit der Erneuerung und der anschlie-ßenden Verteilung eines Schlüssels zum Verschlüsseln / Entschlüsseln der in der Gruppe ausgetauschten Daten erläutert. Aus Vereinfachungsgründen wird das Verfahren zur Schlüsselverteilung teilweise mit der Abkürzung VTKD *("virtual token based key distribution")* bezeichnet. In einer alternativen Ausgestaltung wird ein physischer Token verwendet, weshalb die Abkürzung TKD *("token based key distribution")* nutzbar ist.

Fig. 1 zeigt eine schematische Darstellung einer Systemarchitektur, welche der folgenden Beschreibung zugrunde liegt. Die dreischichtige Architektur umfaßt eine Anwendungsschicht 1, eine Sicherheitsschicht 2 und eine Kommunikationsschicht 3. Ein Schlüsselverteilungsprotokoll 4 ist der Sicherheitsschicht 2 zugeordnet und läuft in einem Signalisierungsteil. Mit Hilfe eines Gruppenschlüssels können sowohl Mediendaten als auch Signalisierungsdaten verschlüsselt werden.

Die Anwendungsschicht 1 umfaßt für eine jeweilige Anwendung erforderliche Komponenten. Bei einer Videokonferenzanwendung sind dies insbesondere ein QoS-Management (QoS - *"Quality of Service"*), eine Floorkontrolle, ein Audiomanager 6, ein Videomanager 5 und ein Whiteboard 4. Wesentlicher Bestandteil ist ein Gruppenmanagement 8, von der im folgenden angenommen wird, daß sie ebenfalls in die Anwendungsschicht 1 integriert ist. Das Gruppenmanagement 8 erhält über eine Nutzerschnittstelle Anforderungen zum Hinzutreten oder Verlassen der Gruppe von Netzelementen, die von der Nutzerschnittstelle über ein Gruppenkommunikationsprotokoll 9 an die Netzelemente der Gruppe weitergeleitet werden. Der Ausfall eines Netzelementes aus der Gruppe von Netzelementen wird mittels des Gruppenkommunikationsprotokolls 9 erkannt und den anderen Netzelementen zur Kenntnis gebracht.

Die Sicherheitsschicht 2 umfaßt Verschlüsselungsmodule 10, ein Authentifizierungsmodul 11 sowie das Schlüsselverteilungsprotokoll 4, welches nachfolgend im Detail beschrieben wird. Eine Schlüsselerneuerung wird ausgelöst, wenn sich die Zusammensetzung der Gruppe von Netzelementen ändert, das heißt ein neues Netzelement der Gruppe beitritt *("join")*, ein Netzelement die Gruppe von Netzelementen verläßt *("leave")* oder ein Netzelement ausfällt. Das Hinzutreten zur Gruppe von Netzelementen ist in VTKD mit einer gegenseitigen Authentifizierung zwischen dem neuen Netzelement und dem das Hinzutreten handhabenden Netzelement verbunden, um sicherzustellen, daß beide Seiten sich vertrauen können.

Die Kommunikationsschicht 3 umfaßt Protokolle für eine Übertragung der Signalisierungs- und der Mediendaten. Für die Schlüsselerneuerung ist ausschließlich das Gruppenkommunikationsprotokoll 9 relevant, welches eine wichtige Grundlage bildet. In kollaborativen Peer-to-Peer-Anwendungen bildet das Gruppenkommunikationsprotokoll die Grundlage für eine zuverlässige Funktionsweise des Systems oder der Anwendung. Es muß Gruppendaten in allen Peers aktualisieren und dafür sorgen, daß alle Peers eine konsistente Sicht auf die Gruppe haben, so daß diese eingeständig Entscheidungen zu den QoS-Parametereinstellungen, der Zuweisung der Floor und der Erneuerung des Gruppenschlüssels treffen können. Hierzu muß das Gruppenkommunikationsprotokoll 9 eine virtuelle Synchronisation zwischen den Gruppenmitgliedern absichern. Virtuelle Synchronisation bedeutet, daß alle Gruppenmitglieder die ausgetauschten Nachrichten zuverlässig in der Reihenfolge erhalten, in der diese gesendet wurden. Das erfordert, daß das Gruppenkommunikationsprotokoll 9 zuverlässig, geordnet und atomar ist, um Datenverluste zu vermeiden, eine Übertragungsreihenfolge zu sichern und eine konsistente Aktualisierung der Gruppendaten zu gewährleisten. Virtuelle Synchronisation erfordert, daß das Gruppenkommunikationsprotokoll 9 alle Änderungen der Gruppenzusammensetzung wie Hinzutreten, Verlassen oder Ausfallen allen Mitgliedern anzeigt. Es sind Protokolle bekannt, die die virtuelle Synchronisation unterstützen wie RMP (vgl. B. Whetten et al.: A High Performance Totally Ordered Multicast Protocol. In Theory and Practice in Distributed Systems, International Workshop, Lecture Notes in Computer Science 938, September 1994, S. 33-57), das Totem-Protokoll (vgl. D. A. Agarwal: Totem: A Reliable Ordered Delivery Protocol for Interconnected Local Area Networks, Ph.D Thesis, University of Santa Barbara, Dezember 1994) und GCP (vgl. E. C. Popovici et al.: Consistency Support for a Decentralized Management in Closed Multiparty Conferences Using SIP, Proc. of the 11th IEEE International Conference on Networks (ICON 2003), Sydney, Australia, IEEE Press, 2003, S. 295-300; M. Zuehlke et al.: A Signaling Protocol for Small Closed Dynamic Multi-peer Groups, in Z. Mammeri et al. (eds.): High Speed Networks and Multimedia Communications (HSNMC 2004), Springer-Verlag, Berlin, Heidelberg 2004, S. 973-984).

Ein verteiltes Schlüsselmanagement erfordert eine virtuelle Synchronisation beim benutzten Gruppenkommunikationsprotokoll 9, das heißt es besteht eine enge Beziehung zwischen diesen beiden Protokollen. Wenn diese Eigenschaft nicht erfüllt ist, kann es aufgrund der unterschiedlichen Sichtweise auf die Gruppe von Netzelementen zu einer Konfusion bei der Schlüsselerneuerung kommen, da möglicherweise mehrere Netzelemente der Gruppe für die Schlüsselerneuerung bestimmt werden. Deshalb wird im folgenden angenommen, daß die Eigenschaft der virtuellen Synchronisation für das Gruppenkommunikationsprotokoll 9 gegeben ist.

Bei dem hier vorgeschlagenen Verfahren zum sicheren Austauschen von Daten in der geschlossen Peer-to-Peer-Konfiguration beruht der Schlüsselaustausch bei einer Schlüsselerneuerung auf dem Prinzip nach Diffie-Hellman (DH) (vgl. E. Rescorla: Diffie-Hellman Key Agreement Method. RFC 2631, Juni 1999), so daß es keine zentrale Schlüsselverwaltung gibt. Im Unterschied zum Schlüsselaustausch zwischen zwei Netzelementen der Gruppe berechnet beim verteilten Ansatz jedes Netzelement der Gruppe mit jedem anderen Netzelement einen geheimen Schlüssel nach dem Diffie-Hellman-Prinzip. Dieser geheime Schlüssel wird im folgenden als gemeinsames oder zweiseitiges DH-Geheimnis bezeichnet.

Die zweiseitigen DH-Geheimnisse werden bei den Mitgliedern der Gruppe von Netzelementen gespeichert und dann für eine Verteilung des Gruppenschlüssels genutzt. Hinsichtlich der Mitglieder der Gruppe von Netzelementen wird angenommen, daß sie die gleichen Rechte haben und ihnen das gleiche Vertrauen entgegengebracht wird. Dieses bedeutet, daß jedes Netzelement der Gruppe von Netzelementen ein neues hinzutretendes Netzelement authentifizieren darf und den Gruppenschlüssel erneuern kann. Es wird ferner angenommen, daß ein zu der Gruppe von Netzelementen hinzutretendes, neues Netzelement vertrauenswürdig ist und nicht aktiv versucht, den laufenden Datenaustausch zu stören oder den Sitzungsschlüssel an Netzelemente weiterzugeben, die nicht Mitglied der Gruppe sind. Es werden jedoch keine Annahmen über die Vertrauenswürdigkeit der Netzelemente nach einem Verlassen der Gruppe von Netzelementen getroffen. Diese Annahmen entsprechen der praktischen Verfahrensweise und werden üblicherweise getroffen.

VTKD nutzt ein Token-Protokoll. Nur ein Tokenhalter hat jeweils das Recht zur Erneuerung des Gruppenschlüssels und zur Authentifizierung eines hinzutretenden, neuen Netzelementes. VTKD verwendet jedoch kein physikalisches Token, das auf einem logischen Kreis der Netzelemente der Gruppe weitergegeben wird, sondern ein virtuelles Token. Virtuell bedeutet in diesem Zusammenhang, daß die Position des virtuellen Tokens und somit des Tokenhalters für jede Schlüsselverteilung neu berechnet wird. Hierdurch wird die explizite Tokenweitergabe mit allen hiermit verbundenen Problemen wie Tokenverlust und -dopplung vermieden. Die neue Tokenposition *PT* wird wie folgt berechnet:

$$PT = VK \bmod n. \qquad\qquad (1)$$

wobei *VK* ein Zahlenwert für eine jeweilige Versionsnummer des Gruppenschlüssels und *n* die aktuelle Anzahl der Netzelemente der Gruppe von Netzelementen $P_1 \ldots P_n$ ist. *VK* wird bei jeder Erneuerung des Gruppenschlüssels um den Wert 1 erhöht. Der Wert für die Versionsnummer wird im Protokoll auch dazu genutzt, Replay-Attacken zu vermeiden, was weiter unten näher erläutert wird.

Die Gewährleistung einer virtuellen Synchronisation mittels des Gruppenkommunikationsprotokolls sichert, daß jedes Netzelement der Gruppe von Netzelementen eine aktuelle Gruppengröße und die Schlüsselversion kennt. Auf diese Weise kann jedes Mitglied der Gruppe von Netzelementen die Position des virtuellen Tokens eindeutig bestimmen.

Bei Veränderung der Zusammensetzung der Gruppe von Netzelementen wird eine Prozedur zur Schlüsselerneuerung ausgelöst. Der Tokenhalter generiert einen neuen Schlüssel und beginnt mit dessen Verteilung an die übrigen Mitglieder der Gruppe von Netzelementen. Hierzu baut der Tokenhalter zeitweilige, separate Übertragungskanäle zu jedem Mitglied der Gruppe von Netzelementen unter Benutzung des jeweiligen gespeicherten gemeinsamen DH-Geheimnisses auf.

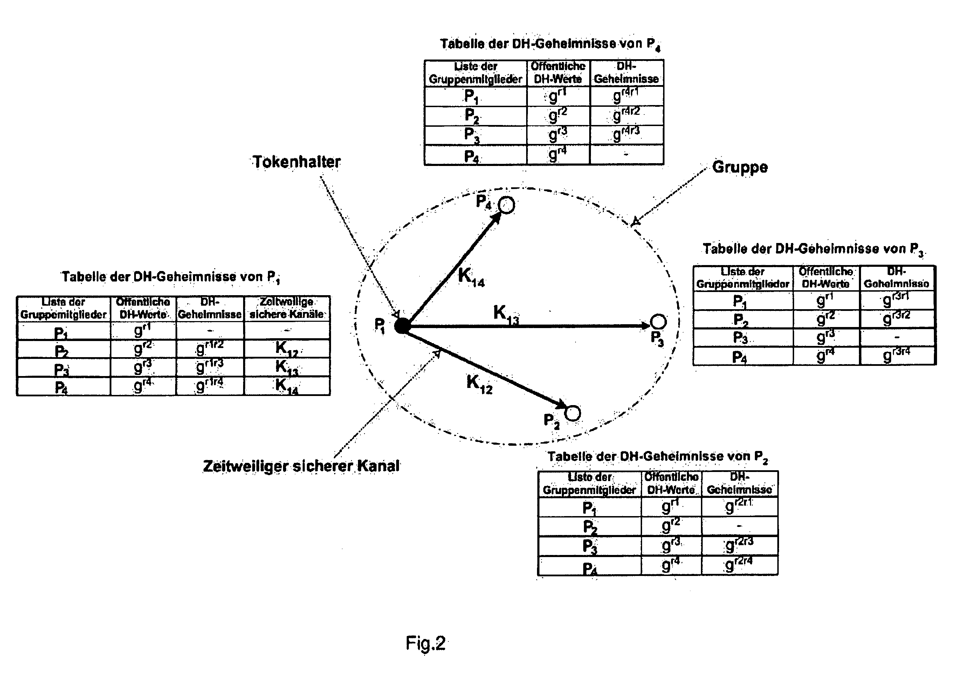

Fig. 2 zeigt eine schematische Darstellung für eine Gruppe von vier Netzelementen $P_1, P_2, P_3, P_4$, wobei $P_1$ der aktuelle Tokenhalter sei. Jedes Mitglied der Gruppe von Netzelementen kennt sein DH-Geheimnis mit jedem anderen der Netzelemente. So speichert $P_1$ die DH-Geheimrilsse $g^{r1r2}$, $g^{r1r3}$ und $g^{r1r4}$. $P_2$ speichert die DH-Geheimnisse $g^{r2r1}$, $g^{r2r3}$ und $g^{r2r4}$. $P_1$ baut dann unter Verwendung der gemeinsamen DH-Geheimnisse $g^{r1r2}$, $g^{r1r3}$, $g^{r1r4}$ geheime Kanäle $K_{12}$, $K_{13}$, $K_{14}$ zu $P_2$, $P_3$ und $P_4$ auf, über die dann der neue Gruppenschlüssel verteilt wird. Die separaten geheimen Übertragungskanäle sind mittels eines geheimen Schlüssels $K_{ij}$ definiert, der zwischen den beiden Netzelementen der $P_i$, $P_j$ berechnet wird. Hierbei wird folgendes Berechnungsschema verwendet:

$$K_{ij-e} = H(g^{rjji}, g^{rirj} \big| N_i \big| ID_i \big| ID_j \big| 0) \qquad\qquad (2)$$

$$K_{ij-a} = H(g^{rjji}, g^{rirj} \big| N_i \big| ID_i \big| ID_j \big| 1) \qquad (j=1, 2, \ldots n \text{ und } j \neq i) \qquad (3)$$

Es wird ein Schlüsselpaar berechnet. $K_{ij-e}$ wird für die Verschlüsselung einer Nachricht genutzt, während $K_{ij-a}$ zum Prüfen der Authentizität der Nachrichten dient. Die Erzeugung des Schlüssels erfolgt mit Hilfe einer kryptografischen Hash-Funktion *H(k,M),* wobei *k* ein Schlüssel und M die Nachricht bezeichnen. Bevorzugt wird HMAC (vgl. H. Krawczyk et al.: HMAC: Keyed-Hashing for Message Authentication, RFC 2104, Februar 1997) verwendet. In die Berechnung gehen das gemeinsame DH-Geheimnis zwischen dem Tokenhalter und dem Netzelement der Gruppe, deren Identitäten *ID* und eine Zufallszahl N ein, die der Tokenhalter an das Netzelement schickt, was unten näher erläutert wird. Das Symbol "|" bezeichnet eine Verkettung.

Jedes Mitglied der Gruppe von Netzelementen verfügt jeweils über die gemeinsamen DH-Geheimnisse mit den anderen Mitgliedern der Gruppe von Netzelementen entsprechend der aktuellen Gruppenzusammensetzung. Dieses wird dadurch gewährleistet, daß verbleibende Netzelemente ein jeweils zugehöriges DH-Geheimnis in ihrer Tabelle löschen, wenn ein Netzelement die Gruppe von Netzelementen verläßt. Im Fall des Hinzutretens eines neuen Netzelementes zur Gruppe von Netzelementen sendet der Tokenhalter während der Authentifizierungsphase alle öffentlichen DH-Werte der Netzelemente der Gruppe von Netzelementen an das neue Netzelement. Umgekehrt übergibt das neue Netzelement seinen öffentlichen DH-Wert an den Tokenhalter, der diesen anschließend an die übrigen Mitglieder der Gruppe von Netzelementen weiterleitet. Jedes Mitglied der Gruppe von Netzelementen berechnet dann das gemeinsame DH-Geheimnis mit dem neuen Netzelement. Auf diese Weise wird das neue Netzelement in die Lage versetzt, ebenfalls die Schlüsselerneuerung und -verteilung auszuführen, falls ihm das virtuelle Token zugewiesen wird.

*Hinzutreten eines neuen Netzelementes ("Join-Prozedur")*

Das Hinzutreten zur Gruppe von Netzelementen umfaßt zwei Schritte: (i) eine Authentifizierung und (ii) eine aufgrund der Veränderung der Zusammensetzung der Gruppe von Netzelementen erforderliche Erneuerung eines Sitzungsschlüssels.

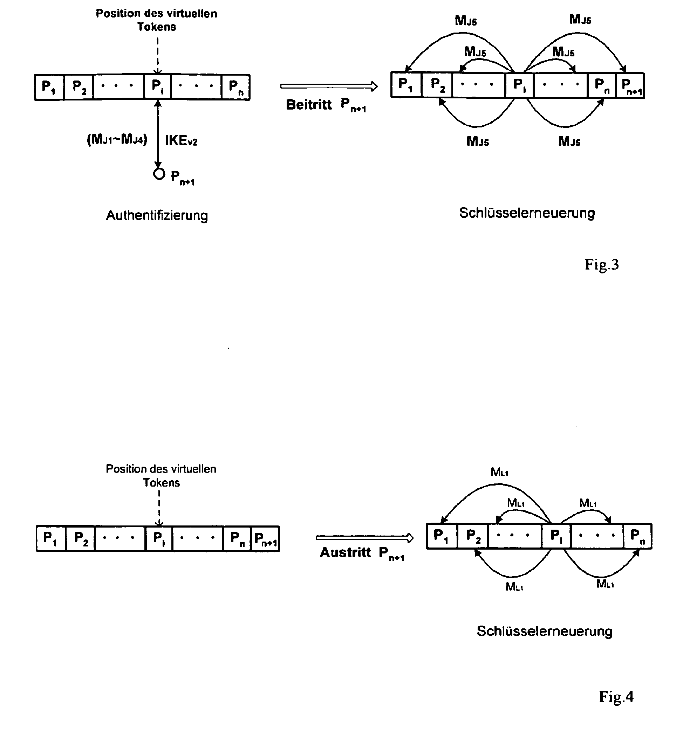

Fig. 3 zeigt eine schematische Darstellung des Prozesses des Hinzutretens eines neuen Netzelementes. Es werden fünf Nachrichten oder Kommunikationsrunden benötigt, nämlich vier für die Authentifizierung und einer für die Schlüsselerneuerung.

Für eine gegenseitige Authentifizierung zwischen dem Tokenhalter und dem hinzutretenden, neuen Netzelement kann ein beliebiges Protokoll für die Instanzen-Authentifizierung verwendet werden, beispielsweise die X.509 Authentifizierungsprozedur (vgl. ITU-T Recommendation X.509 ISO/IEC 9594-8: Public Key and Attribute Certificate Frameworks), IKE (vgl. D. Harkins et al.: The Internet Key Exchange (IKE), RFC2409, Nov. 1998) oder JFK (vgl. W. Aiello et al.: Just Fast Keying (JFK). draft-ietf-ipsec-jfk-04.txt. Juli 2002). Bei dem folgenden Ausführungsbeispiel wird IKEv2 ("Internet Key Exchange Protocol") (vgl. C. Kaufman: Internet Key Exchange (IKEv2) Protocol, draft-ietf-ipsec-ikev2-07.txt, April 2003) verwendet, welches im Unterschied zu den meisten anderen Protokollen die Identität der an der Authentifizierung beteiligten Netzelemente schützt und weniger Kommunikationsrunden / Nachrichten benötigt. IKEv2 wird hier als Ausgangsbasis verwendet und für das vorgeschlagene Verfahren adaptiert.

IKEv2 unterstützt zwei Formen der Authentifizierung. Digitale Signaturen und vorvereinbarte gemeinsame Geheimnisse. Im folgenden werden digitale Signaturen genutzt, die besser geeignet sind für Peer-to-Peer-Konfigurationen als gemeinsame Geheimnisse, die Client- / Server-Architekturen unterstützen.

Bei digitalen Signaturen hängt die erfolgreiche Authentifizierung von der Authentizität eines öffentlichen Schlüssels ab. Dieses wird überwiegend mittels Verwendung von Zertifikaten überprüft. Beispielsweise wird das X.509-Zertifikat (vgl. R. Housley et al.: Internet X.509 Public Key Infrastructure Certificate and CRL Profile. RFC 2459, Januar 1999) gegenwärtig häufig genutzt. Es empfiehlt die Anwendung einer RSA-Signatur. Hierzu müssen beide Partner im Besitz eines RSA-Schlüsselpaares sein. Selbstverständlich ist der öffentliche Schlüssel von einer zertifizierten Autorität für beide Partner notwendig, um die Zertifikate, die von der zertifizierten Autorität signiert sind, überprüfen zu können.

Fig. 3 zeigt den Beitritt eines neuen Partners $P_{n+1}$ zu einer aus $n$ Teilnehmern bestehenden Gruppe von Netzelementen $P_1 ... P_n$. Es wird angenommen, daß das Netzelement $P_i$ der aktuelle Tokenhalter sei, der entsprechend Formel (1) bestimmt wurde. Für die gegenseitige Authentifizierung zwischen $P_i$ und $P_{n+1}$ werden die folgenden vier Nachrichten ausgetauscht, wobei $HDR$ den Nachrichtenknopf bezeichnet:

$$M_{J1}(P_i \rightarrow P_{n+1}) : HDR, \, a^{ri}, \, SA_i, \, NA_i$$

$$M_{J2}(P_{n+1} \rightarrow P_i) : HDR, \, a^{rn+1}, \, SA_{n+1}, \, NA_{n+1}$$

$$M_{J3}(P_i \rightarrow P_{n+1}) : HDR, \, SK \, \{ID_i, \, CERT_i, \, SIG_i, \, ID_1, \, ID_2 ... ID_n, \, G^{r1}, \, g^{r2} ... g^{rn}\}$$

$$M_{J4}(P_{n+1} \rightarrow P_i) : HDR, \, SK \, \{ID_{n+1}, \, CERT_{n+1}, \, SIG_{n+1}, \, g^{rn+1}\}$$

Hierbei bedeuten $CERT$ das Zertifikat des öffentlichen RSA-Schlüssels und $SIG$ die digitale Signatur. SK{M} bedeutet, daß die Nachricht M unter einem Verteilungsschlüssel $SK_e$ verschlüsselt und unter einem Authentifizierungsschlüssel $SK_a$ authentifiziert wird. $g^r$ ist der öffentliche DH-Wert zur Erzeugung des zeitweiligen sicheren Kanals K. $a^r$ ist der öffentliche DH-Wert zur Erzeugung eines Sitzungsschlüssels $SK$. Wie die digitale Signatur $SIG$ und der Sitzungsschlüssel $SK$ generiert werden, ist ausführlich im Standard IKEv2 (vgl. C. Kaufman: Internet Key Exchange (IKEv2) Protocol, draft-ietf ipsec-ikev2-07.txt, April 2003) erläutert und bedarf hier deshalb keiner weiteren Ausführung.

Die Nachrichten $M_{j1}$ und $M_{j2}$ erfüllen zwei Funktionen. Sie dienen zum einen dazu, eine Sicherheitsassoziation SA auszuhandeln. Die Sicherheitsassoziation $SA$ spezifiziert kryptographische Parameter, die in den Nachrichten $M_{j3}$ und $M_{j4}$ genutzt werden. Des weiteren werden mit den Nachrichten $M_{j1}$ und $M_{j2}$ die öffentlichen DH-Werte $a^r$ und die Zufallszahlen $NA$ beider Partner ausgetauscht. Diese werden zur Erzeugung des Sitzungsschlüssels $SK$ verwendet, der zum Schützen der folgenden Nachrichten $M_{j3}$ und $M_{j4}$ eingesetzt wird.

Die Nachrichten $M_{j3}$ und $M_{j4}$ dienen der wechselseitigen Authentifizierung der Partner und dem Aushandeln der Sicherheitsassoziationen, die für die weitere Kommunikation zwischen den beiden Partnern genutzt wird. Die Authentifizierung der Partner erfolgt mittels gegenseitiger Verifikation der Signaturen $SIG$. Hierzu signieren beide Peers die Verkettung ihrer ersten Nachrichten mit der Zufallszahl des Partners mit ihrem privaten RSA Schlüssel. Das schließt zugleich mögliche Man-in-the-Middle-Attacken aus, da der Angreifer die Signaturen nicht ändern kann, ohne die privaten RSA-Schlüssel beider Partner zu kennen.

Das Prinzip der Aushandlung der Sicherheitsassoziation kann nicht für das hier vorgeschlagene Verfahren unverändert übernommen werden, da es sich in IKEv2 um eine zweiseitige Beziehung handelt. $M_{j3}$ und $M_{j4}$ tauschen

in VTKD zusätzlich Gruppeninformationen aus. Die Nachricht $M_{j3}$ transportiert die Identitäten aller Gruppenmitglieder ($ID_1$, $ID_2$, ..., $ID_{11}$) und deren zugehörigen öffentlichen DH-Werte ($g^{r1}$, $g^{r2}$, ..., $g^{rn}$). Der eingeladene Partner gibt mit $M_{j4}$ seine Identität $ID_{n+1}$ und seinen öffentlichen DH-Wert $g^{rn+1}$ zurück.

Wenn die Authentifizierung nicht erfolgreich ist, informiert der Tokenhalter mit der Nachricht $M_{jf}$:

$$M_{jf}(P_i \rightarrow P_1, P_2 \ldots P_n) : HDR, GK_{alt}\{ID_{n+1}\}$$

die Gruppe von Netzelementen. Der Beitrittsprozeß wird abgebrochen. Die Gruppe kann weiterhin den gleichen Sitzungsschlüssel verwenden.

*Erneuerung des Gruppenschlüssels*

Bei einer erfolgreichen Authentifizierung erneuert das Netzelement $P_i$ den Gruppenschlüssel. Der neue Gruppenschlüssel $GK_{neu}$ wird zufällig generiert und ist unabhängig von den vorangegangenen. Der Tokenhalter sendet den neuen Gruppenschlüssel mit der Multicast-Nachricht $M_{j5}$ an die erweiterte Gruppe. Für den Austausch von $M_{j5}$ werden die oben erläuterten Übertragungskanäle genutzt. $M_{j5}$ hat folgende Struktur:

$$M_{j5}(P_i \rightarrow P_1, P_2 \ldots P_{n+1}) : HDR, GK_{alt}\{ID_i, N_i\}, K_{i1}\{VK, GK_{neu}\}, \ldots,$$
$$K_{in}\{VK, GK_{neu}\}, SK\{GK_{neu}, VK, GSA, ID_i\}, GK_{neu}\{g^{rn+1}, ID_{n+1}\}$$

Die Nachricht hat vier Teile, die unterschiedlichen Zielen dienen. Ein erster Teil $GK_{alt}\{ID_i, N_i\}$ enthält die Identität des Tokenhalters $ID_i$ sowie eine Zufallszahl N und wird mit dem alten Gruppenschlüssel $GK_{alt}$ verschlüsselt. Beide Elemente werden genutzt, um den sicheren Kanal entsprechend Formel (2) und (3) aufzubauen.

Ein zweiter Nachrichtenteil $K_{i1}\{VK, GK_{new}\}, \ldots, K_{in}\{VK, GK_{new}\}$ enthält den neuen Gruppenschlüssel $GK_{neu}$ und einen Zahlenwert für eine aktuelle Versionsnummer $VK$. Beide Elemente werden mit Hilfe des jeweiligen Schlüssels des geheimen Übertragungskanals $K_{ij}$ ($j=1, 2, \ldots, n$ mit $j \neq i$) für jedes Gruppenmitglied separat verschlüsselt. Beim Empfang berechnet das Netzelement unter Zuhilfenahme der Angaben aus dem ersten Nachrichtenteil die aktuellen Schlüssel seines Kanals und entschlüsselt seinen Teil.

Ein dritter Nachrichtenteil $SK\{GK_{neu}, VK, GSA, ID_i\}$ übermittelt den Gruppenschlüssel $GK_{neu}$ und dessen Versionsnummer $VK$ an das neue Netzelement. Weiterhin werden eine Sicherheitsassoziationen der Gruppe $GSA$ sowie die $ID$ des Tokenhalters übermittelt, damit das neue Netzelement den Tokenhalter als Absender erkennt. Dieser Nachrichtenteil wird mit dem während der Authentifizierungsphase vereinbarten Sitzungsschlüssel $SK$ verschlüsselt.

Ein vierter Nachrichtenteil $GK_{neu}(g^{rn+1}, ID_{n+1})$, der mit dem neuen Gruppenschlüssel $GK_{neu}$ verschlüsselt ist, enthält die Identität des neuen Netzelementes $ID_{n+1}$ und dessen öffentlichen DH-Wert $g^{rn+1}$. Nach der Entschlüsselung des vierten Nachrichtenteils und der Berechnung des zweiseitigen DH-Geheimnisses mit dem neuen Netzelement verfügen alle Gruppenmitglieder wieder über die gleichen Informationen, d. h. sie sind bei einer Zuweisung des virtuellen Tokens in der Lage, den Gruppenschlüssel in der beschriebenen Art und Weise zu erneuern.

*Verlassen eines Netzelementes ("Leave-Prozedur")*

Wenn ein Netzelement die Gruppe von Netzelementen verläßt, informiert das Gruppenmanagement die verbleibenden Gruppenmitglieder hierüber. Die Gruppenmitglieder bestimmen nach Formel (1) den neuen Tokenhalter, und dieser startet die Erneuerung des Gruppenschlüssels. Fig. 4 zeigt hierfür ein Beispiel.

Es wird angenommen, daß das Netzelement $P_{n+1}$ eine Gruppe von $n+1$ Netzelementen verläßt. $P_i$ sei wieder der Tokenhalter. Die Schlüsselerneuerung beginnt wieder damit, daß der Tokenhalter einen neuen Gruppenschlüssel $GK_{neu}$ erzeugt und mit der Nachricht $M_{L1}$ per Multicast an die verbleibenden Gruppenmitglieder sendet. $M_{L1}$ hat eine ähnliche Struktur wie die Beitritts-Nachricht $M_{j5}$:

$$M_{L1}(P_i \rightarrow P_1, P_2 \ldots P_n) : HDR, GK_{alt}\{ID_i, N_i\}, K_{i1}\{VK, GK_{neu}\}, \ldots, K_{in}\{VK, GK_{neu}\}$$

Die Nachricht $M_{j5}$ enthält zuerst wieder die Identität des Tokenhalters und eine Zufallszahl für die Erneuerung der Schlüssel $K_{ij}$ *(j = 1, 2, ..., n mit j ≠ i)* für die separaten geheimen Kanäle nach den Beziehungen (2) und (3). Beide Elemente sind mit dem alten Gruppenschlüssel verschlüsselt. Der neue Gruppenschlüssel $GK_{neu}$ und die aktuelle Schlüsselversion *VK* werden mit dem Schlüssel des jeweiligen Kanals verschlüsselt.

Das die Gruppe verlassende Netzelement kann nicht in den Besitz des neuen Gruppenschlüssels $GK_{neu}$ gelangen, da es nicht in der Lage ist, die geheimen Kanäle ohne Kenntnis der zweiseitigen Geheimnisse $g^{rir1}, g^{rir2}, ... g^{rirn}$ zwischen dem Tokenhalter und den anderen Mitgliedern der Gruppe von Netzelementen abzuleiten. Wenn die verbleibenden Gruppenmitglieder die Nachricht $M_{L1}$ erhalten, können sie diese entschlüsseln, wie das oben für die Nachricht $M_{j5}$ beschrieben wurde.

Bei dem hier vorgeschlagenen Verfahren ist die Position des virtuellen Tokens jederzeit bekannt. Auch Änderungen der Position bei einer Veränderung der Gruppenzusammensetzung können genau bestimmt werden. Als Sonderfall muß jetzt noch der Ausfall eines Netzelementes, einschließlich der des Tokenhalters betrachtet werden. Diese Änderung der Gruppenzusammensetzung wird der Sicherheitsschicht nicht vom Gruppenmanagement sondern durch das Gruppenmanagementprotokoll signalisiert, das den Ausfall erkennt. Vom Ablauf entspricht der Ausfall eines Netzelementes dem Austritt eines Gruppenmitglieds. Nach der Anzeige des Ausfalls verhalten sich die Gruppenmitglieder wie bei dem zuvor beschriebenen Verlassen *("Leave-Prozedur ")*.

*Sicherheitsanalyse*

Im folgenden wird erläutert, wie von dem beschriebenen verfahren Sicherheitsanforderungen eingehalten werden.

*Key Authentication:* Der Zugang zum Gruppenschlüssel von außerhalb der Gruppe von Netzelementen wird zum einen dadurch verhindert, daß jedes neue Gruppenmitglied vor dem Beitritt auf seine Identität überprüft wird. Nur wenn diese Überprüfung erfolgreich ist, erhält das neue Netzelement den Gruppenschlüssel. Umgekehrt überprüft das beitretende Netzelement anhand der mit Nachricht $M_{j3}$ übermittelten Signatur, daß die übermittelten Identitäten und öffentlichen DH-Werte wirklich der beizutretenden Gruppe zuzuordnen sind. Die Schlüsselerneuerungsprozedur stellt mittels Nutzung geheimer Kanäle, die aus den zweiseitigen DH-Geheimnissen der authentifizierten Mitglieder abgeleitet werden, sicher, daß der neue Gruppenschlüssel nur an die aktuelle Gruppe ausgeliefert werden kann.

*Forward confidentiality:* Die weiterführende Vertraulichkeit wird mittels des Vorgehens gesichert, wenn ein Netzelement die Gruppe verläßt. Ein ausscheidendes Gruppenmitglied kann keinen Zugriff auf den neuen Gruppenschlüssel erlangen, da er aufgrund der fehlenden Kenntnis der zweiseitigen DH-Geheimnisse und der neugenerierten Zufallszahl keinen Zugriff auf die geheimen Kanäle zwischen Tokenhalter und verbleibenden Mitgliedern erlangen kann, über die der neue Gruppenschlüssel verteilt wird.

*Backward confidentiality:* Rückwirkende Vertraulichkeit wird dadurch erreicht, daß der alte Gruppenschlüssel dem beitretenden Netzelement mit der Nachricht $M_{j5}$ nicht ausgeliefert wird. Die Nachrichtenteile von $M_{j5}$, die mit dem neuen Schlüssel entschlüsselt werden können, enthalten den alten Gruppenschlüssel nicht.

*Collusion freedom:* Ein geheimes Einverständnis zwischen beteiligten Netzelementen zur Aufdeckung des aktuellen Gruppenschlüssels wird dadurch vermieden, daß jeder neu generierte Gruppenschlüssel nicht in Beziehung zu den vorangegangenen Gruppenschlüsseln steht, so daß die beteiligten Netzelemente ihre alten Gruppenschlüssel nicht für eine Aufdeckung nutzen können.

*Perfect Forward Secrecy:* Eine dauerhafte Geheimhaltung einer abgeschlossenen Sitzung ist dann nicht gewährleistet, wenn ein langfristiges Credential (Berechtigungsnachweis) kompromittiert wird oder es einem aktiven Angreifer gelingt, ältere Gruppenschlüssel aufzudekken. Das vorgeschlagene Verfahren sieht nur ein langfristiges Credential vor, den privaten RSA-Schlüssel, der während der Authentifizierungsphase benutzt wird. Das RSA-Schlüsselpaar wird jedoch niemals für die Verschlüsselung des Gruppenschlüssels genutzt, so daß der Besitzer mit einem kompromittierten RSA-Schlüssel nicht an den Gruppenschlüssel gelangen kann. Der zweite Fall ist nur relevant, wenn ein Treffen aus mehreren Sitzungen besteht, für die verschiedene Sitzungsschlüssel verwendet werden. Es wird hier als Beispiel ein solches Treffen betrachtet, das aus vier Sitzungen bestehen. Der Gruppenschlüssel wird für jede Sitzung erneuert. Hierdurch wird jede Sitzung durch seine Sitzungsschlüssel und die zugehörigen Schlüsselmaterialien charakterisiert, wie sie in der folgenden Tabelle 1 angegeben sind.

Tabelle 1

| Schlüsselmaterialien | Sitzung 1 | Sitzung 2 | Sitzung 3 | Sitzung 4 |
|---|---|---|---|---|
| Gruppenschlüssel *(GK)* | $GK_1$ | $GK_2$ | $GK_3$ | $GK_4$ |
| Zeitweitliger geheimer Schlüssel $K_{ij}$ zwischen $P_i$ und $P_j$ | $K_{ij1}$ | $K_{ij2}$ | $K_{ij3}$ | $K_{ij4}$ |
| Zufallszahl $(N_i)$ | $N_{i1}$ | $N_{i2}$ | $N_{i3}$ | $N_{i4}$ |

(fortgesetzt)

| Schlüsselmaterialien | Sitzung 1 | Sitzung 2 | Sitzung 3 | Sitzung 4 |
|---|---|---|---|---|
| Gemeinsames Geheimnis von $P_i$ u. $P_j$ | $g^{rirj}$ | $g^{rirj}$ | $g^{rirj}$ | $g^{rirj}$ |
| Geheimer DH-Wert von $Pi$ | $r_i$ | $r_i$ | $r_i$ | $r_i$ |

Alle Schlüsselmaterialien außer den gemeinsamen Geheimnissen ($g^{rirj}$) zwischen $P_i$ und den anderen Mitgliedern $P_j$ ($j$ = 1, 2 ..., n mit $j \neq i$) und ihren geheimen DH-Werten werden zu jeder Sitzung durch neue Werte ersetzt. Nach den obigen Formel (2) und (3) hängt die Aktualität der zeitweiligen geheimen Gruppenschlüssel entscheidend von der Zufallszahl $N_i$ ab. Da jede Sitzung einen anderen, Gruppenschlüssel nutzt, wird auch jeweils ein anderer Wert von $N_i$ für die Generierung verwendet. Wenn wir nun annehmen, daß ein Angreifer erfolgreich in das Netzelement $P_i$ während der Sitzung 3 einbricht und den Zugang zu den in der obigen Tabelle grau unterlegten Schlüsselmaterialien erhält, so kann er immer noch nicht in den Besitz der Schlüssel vorangegangener Sitzungen gelangen. Dazu benötigt er die Zufallszahl $N_2$. Diese ist jedoch mit dem Gruppenschlüssel $GK_1$ (siehe Nachrichten $M_{j5}$ und $M_{L1}$ oben) verschlüsselt. Wenn der Angreifer $GK_2$ aufdecken möchte, benötigt er somit $GK_1$. Letzterer existiert aber nicht mehr im System. Analoges gilt für die Aufdeckung von $GK_1$. Der Angreifer wäre somit nicht in der Lage abgeschlossene Sitzungen aufzubrechen.

*Resistance to known key attacks:* Resistenz gegenüber Attacken mit bekannten Gruppenschlüsseln bedeutet, daß ein aufgedeckter Gruppenschlüssel nicht zur Kompromittierung des aktuellen Sitzungsschlüssels verwendet werden kann. Hier sind wieder zwei Fälle zu unterscheiden (A. J. Menezes et al.: Handbook of applied cryptography, CRC Press series on discrete mathematics and its applications, CRC Press, 1997).

Der erste Fall betrachtet den passiven Angreifer, der die Kommunikation aufzeichnet und später analysiert. Es wird angenommen, daß der passive Angreifer die vorangegangenen Schlüssel und die Zufallszahl N für die Erzeugung des zeitweiligen geheimen Schlüssels $K_{ij}$ zwischen zwei Partnern kennt. Das reicht aber nicht. Um den Schlüssel zu erzeugen, benötigt er das gemeinsame DH-Geheimnis der Partner. Diese werden jedoch niemals über die Verbindung übertragen. Der andere Fall betrifft den aktiven Angreifer, der versucht, die Daten auf der Verbindung zu ändern. Wir betrachten hier die Situation, daß der Tokenhalter $P_i$ den Gruppenschlüssel durch Aussenden der Nachrichten $M_{j5}$ oder $M_{L1}$ erneuert. Weiterhin nehmen wir an, daß der aktive Angreifer irgendwie in den Besitz des alten Gruppenschlüssels $GK_{alt}$ gelangt ist, so daß er $M_{j5}$ oder $M_{L1}$ abfangen könnte und mit Hilfe von $GK_{alt}$ die Nachricht wie folgt ändern könnte:

| $P_i$ Tokenhalter | Aktiver Angreifer | Empfänger $P_1$ |
|---|---|---|
| $HDR, GK_{alt}\{ID_i, N_i\}$, | $HDR, GK_{alt}\{ID_i', N_i'\}$, | $HDR, GK_{alt}\{ID_i', N_i'\}$, |
| $\rightarrow$ | $\rightarrow$ | |
| $K_{il}\{FK, GK_{neu}\}...$ | $K_{il}\{FK, GK_{neu}\}...$ | $K_{il}\{FK, GK_{neu}\}...$ |

Der Angreifer ersetzt $ID_i$ und $N_i$ durch eine andere Identität $ID_i$ und Zufallszahl $N_i$. Die gefälschte Nachricht würde jedoch bei den Empfängern zur Generierung anderer zeitweiliger geheimer Schlüssel $K_{ij}$ führen, was jedoch durch das Authentifizieren des Nachrichtenteils $\{VK, GK_{neu}\}$ mittels inkorrektem Schlüssel $K_{ij}$ aufgedeckt wird. Wenn also ein Angreifer mit einem älteren Schlüssel Teile der Nachricht verfälscht, dann erkennen die Gruppenmitglieder den Angriff.

Zur Bewertung des Leistungsverhaltens des vorgeschlagenen Verfahrens wird dieses im folgenden mit dem von Rodeh et al. vorgeschlagenen Schlüsselverteilungsprotokoll (vgl. O. Rodeh et al.: Optimized Group Rekey for Group Communication Systems. In Symposium Network and Distri-buted System Security (NDSS), San Diego, California, Feb. 2000, S. 39-48) und dem effizientesten Schlüsselvereinbarungsprotokoll TKDH (vgl. Y. Kim et al.: Simple and fault-tolerant key agreement for dynamic collaborative groups, in S. Jajodia (ed.): 7th ACM Conference on Computer and Communications Security, Athens, Greece, Nov. 2000, ACM Press, S. 235-244) verglichen. Für den Vergleich wird ein Benchmark für kryptographische Algorithmen genutzt (vgl. Crypto++ 5.2.1 Benchmarks http://www.eskimo.com/~weidai/benchmarks.html). Der Vergleich untergliedert sich in den Authentifizierungs- und den Schlüsselerneuerungsteil.

Eine Authentifizierung ist nur in dem hier vorgeschlagenen Verfahren enthalten, nicht aber in den beiden Vergleichsprotokollen, weshalb hier nur der Aufwand für VTKD angegeben werden kann. Der Aufwand für die Authentifizierung ergibt sich aus den Berechnungskosten für die vier Nachrichten $M_{j1}$~$M_{j4}$ und die zusätzliche Berechnung der zweiseitigen DH-Geheimnisse. Nach dem IKEv2-Standard umfassen die Berechnungskosten den Aufwand für die Berechnung von zwei RSA-Signaturen, der Überprüfung von zwei Signaturen, vier symmetrischen kryptographischen Operationen und vier Hash-Abbildungen. Der zusätzliche Aufwand für die Berechnung der $n$ DH-Geheimnisse geht noch wesentlich stärker en. Für Gruppen bis zu 100 Teilnehmern, wie sie für VTKD vorgesehen sind, ergibt sich mit dem Benchmark eine Berechnungsdauer von 386ms, was akzeptabel wäre. Genaugenommen kann diese Berechnung aber "*offline*" ausgeführt werden, da die DH-Geheimnisse nicht während der Authentifizierungsphase benötigt werden, sondern erst bei der Schlüsselerneuerung für die geheimen Kanäle.

Ein akzeptiertes Kriterium für die Einschätzung der Effizienz von Schlüsselaustauschprotokollen ist die Zeit zwischen dem Auslösen einer Schlüsselerneuerung und der Verfügbarkeit des neuen Schlüssels bei allen Teilnehmern. Diese Verzögerung wird hauptsächlich durch die Kommunikations- und Berechnungsaufwand bestimmt. Nachfolgend werden diese beiden Aspekte für die zu vergleichenden Protokolle betrachtet.

Der Kommunikationsaufwand bezieht sich auf die Zahl der Kommunikationsrunden und die Größe der Nachrichten. Sie sind für die drei Protokolle in Tabelle 1 zusammengefaßt. Für VTKD und TGDH ist der Kommunikationsaufwand gering, da für das Beitreten und Verlassen jeweils nur eine Multicast-Nachricht ausgesendet wird. Rodeh's Protokoll benötigt mehrere Kommunikationsrunden für das Verlassen der Gruppe. Bezüglich der Nachrichtengröße ist das Rodeh Protokoll im Vorteil. Es versendet nur kleine Nachrichten, während die Nachrichtengrößen bei VTKD für 100 Mitglieder 4 Kbyte und für TGDK sogar 25 Kbyte betragen. Jedoch ist das kein allzu großes Problem, da 25 Kbyte problemlos in einem UDP-Paket untergebracht werden können.

Tabelle 2

| Protokoll | Operation | Kommunikationsaufwand | | | | |
|---|---|---|---|---|---|---|
| | | Kommunikationsrunden | Multicast | Größe der Multicast-Nachricht | Unicast | Größe der Unicast-Nachricht |
| Rodeh et al. | Beitritt | 2 | 2 | $\log_2 n$[1] symmetrische Schlüssel[2] | 1 | 1 symmetrischer Schlüssel |
| | Austritt | $\log_2 n$ | $\log_2 n$ | $\log_2 n$ symmetrische Schlüssel | $\log_2 n$ | 1 symmetrischer Schlüssel |
| TGDH | Beitritt[4] | 1 | 1 | 2n asymmetrische Schlüssel[3] | 1 | 1 symmetrischer Schlüssel |
| | Austritt | 1 | 1 | $\log_2 n$ asymmetrische Schlüssel | - | - |
| VTKD | Beitritt | 1 | 1 | $n$ symmetrische Schlüssel +1 asymmetrischer Schlüssel | - | - |
| | Austritt | 1 | 1 | $n$ symmetrische Schlüssel | - | - |

Legende:
1) *n* ist die Zahl der Gruppenmitglieder.
2) Die typische Größe eines symmetrischen Schlüssels ist 128 bit = 16bytes.
3) Die typische Größe eines asymmetrischen Schlüssels ist 1024 bit =128 bytes.
4) Der Beitritt in TGDH erfordert zwei Kommunikationsrunden, aber nur eine Kommunikationsrunde dient der Schlüsselerneuerung.

Tabelle 3 zeigt den Berechnungsaufwand der Protokolle mittels Angabe der unterschiedlichen kryptographischen Operationen, die sie verwenden. Der Vergleich zeigt, daß die Protokolle asymmetrische und symmetrische Operationen unterschiedlich einsetzen. Während TGDH auf der einen Seite intensiv asymmetrische Berechnungen durchführt, nutzt das hier vorgeschlagene Verfahren vorrangig symmetrische Operationen. Rodeh's Protokoll liegt dazwischen. Da bekanntlich asymmetrische kryptographische Berechnungen wesentlich langsamer sind als symmetrische, ist der gesamt Berechnungsaufwand von VTKD geringer als der der anderen Protokolle.

Tabelle 3

| Protokoll | Operation | Mitglieder | Berechnungsaufwand | | | | |
|---|---|---|---|---|---|---|---|
| | | | DH-Geheimnisse[4] | RSA Signatur[5] | RSA Verifikation[5] | Hash und symmetrische Verschlüsselung | Hash und symmetrische Entschlüsselung |
| Rodeh | Beitritt | Leiter des Baums | 1 | - | - | 2 | - |
| | | Neues Mitglied | 1 | - | - | - | 1 |
| | | Teilnehmer | - | - | - | - | 1 |
| | Austritt | Leiter des Baums | $\log_2 n$[1] | - | - | $\log_2 n$ | - |
| | | Leiter des Unterbaums | 1 | - | - | - | 1 |
| | | Teilnehmer | - | - | - | - | 1 |
| TGDH[2] | Beitritt | Sponsor | $2\log_2 n$ | 1 | - | - | - |
| | | Neues Mitglied | $2\log_2 n$ | - | 1 | - | - |
| | | Teilnehmer | $1 \dots 2\log_2 n$ | - | 1 | - | - |
| | Austritt | Sponsor | $2\log_2 n$ | 1 | - | - | - |
| | | Teilnehmer | $1 \dots 2\log_2 n$ | | 1 | - | - |
| VTKD[3] | Beitritt | Tokenbesitzer | - | - | - | $n+3$ | - |
| | | Neues Mitglied | - | - | - | - | 2 |
| | | Teilnehmer | 1 | - | - | - | 3 |
| | Austritt | Tokenbesitzer | - | - | - | $n+2$ | - |
| | | Teilnehmer | - | - | - | - | 2 |

Legende:

1) $n$ ist die Anzahl der Gruppenmitglieder.

2) Es wird der beste Fall von einem ausgeglichenen Schlüsselbaum für TGDH betrachtet. Der schlechteste Fall erfordert $n$ DH-Geheimnisbetrachtungen.

3) Hier wird der Berechnungsaufwand für die Gruppenschlüsselerneuerung dargestellt, bei der der Erstellung der Nachrichten $M_{j5}$ und $ML_1$ in VTKD auftritt.

4) Eine DH-Geheimnisberechnung bedeutet eine Exponentialberechnung.

5) RSA-Signatur in TGDH wird für die Nachrichtenauthentisierung genutzt.

Mit den Tabellen 2 und 3 kann nun die Verzögerung der Schlüsselerneuerung $Dg_{kr}$ wie folgt bestimmt werden:

$$D_{\mathrm{gkr}} = D_{\mathrm{cs}} + D_{\mathrm{gc}} + D_{\mathrm{cr}} \qquad\qquad (4)$$

wobei $D_{cs}$ und $D_{cr}$ die kryptographische Berechnungsverzögerung des Senders bzw. Empfängers und Dgc die Kommunikationsverzögerung bezeichnen.

Für den Vergleich wird weiter angenommen, daß alle Protokolle über dem gleichen Gruppenkommunikationsprotokoll laufen, das eine Verzögerung von 20ms für jede Kommunikationsrunde erzeugt. Das ist eine typische Verzögerung in mittelgroßen Netzen, wie dem G-WiN, in dem wir eine maximale Umlaufzeit von 40ms zu beliebigen Knoten gemessen haben. Die Berechnungsverzögerung für den Sender und Empfänger wurde wieder unter Verwendung des kryptographischen Benchmarks Crypto++ 5.2.1 Benchmarks http://www.eskimo.com/~weidai/benchmarks.html bestimmt.

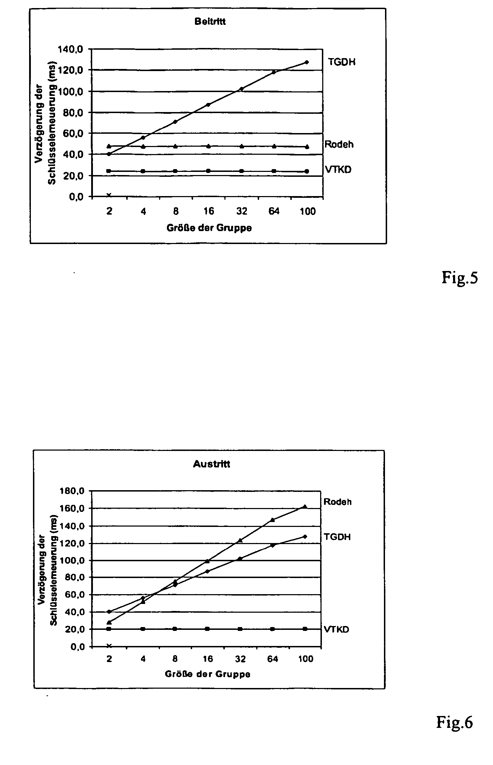

Die sich insgesamt ergebenden Verzögerungen für die Schlüsselerneuerung für den Beitritt zur Gruppe und das Verlassen sind in Fig. 5 dargestellt. VTKD ist effizienter als die anderen beiden Protokolle. Der Grund hierfür liegt darin, daß VTKD weniger Kommunikationsrunden benötigt als die anderen beiden und überwiegend symmetrische Verschlüsselungsoperationen nutzt.

Die effiziente und sichere Schlüsselerneuerung bildet eine Grundlage für die vertrauliche Kommunikation in geschlossenen dynamischen Gruppen. Solche Einsatzfälle sind insbesondere im geschäftlichen Bereich gegeben, wo zunehmend Verhandlungen und Beratungen auch über das Internet abgewickelt werden. Für zentralisierte Ansätze mit einem Gruppenserver existieren praktikable Ansätze. Mit der steigenden Nutzung der Mobilkommunikation sind zunehmend Lösungen gefragt, die auf einem Gruppenserver verzichten und eine Peer-to-Peer-Kommunikation der Partner unterstützen. Hierdurch werden vor allem auch Ad hoc-Meetings unterstützt. Die eingesetzten Verfahren müssen effizient sein, da neben der Schlüsselverteilung und Audio- / Videoverschlüsselung mit der Komprimierung und Dekomprimierung der Mediendaten auch andere zeit- und ressourcenintensive Prozesse auf den Endsystemen laufen. Die Skalierung des Protokolls ist für solche Anwendungen weniger das Problem sondern die Effizienz und Sicherheit des Verfahrens.

Die in der vorstehenden Beschreibung, den Ansprüchen und der Zeichnung offenbarten Merkmale der Erfindung können sowohl einzeln als auch in beliebiger Kombination für die Verwirklichung der Erfindung in ihren verschiedenen Ausführungsfbrmen von Bedeutung sein.

## Patentansprüche

1. Verfahren zum Ändern eines Gruppenschlüssels $GK$ für einen sicheren Datenaustausch in einer Gruppe von Netzelementen $P_l ... P_n$ mit $n = 2, 3, ...$ in einem Netzwerksystem mit einer geschlossenen Peer-to-Peer-Konfiguration und einem eine virtuelle Synchronität unterstützenden Gruppenkommunikationsprotokoll in einer Kommunikationsschicht einer Systemarchitektur des Netzwerksystems, wobei bei einer Veränderung einer Zusammensetzung der Gruppe von Netzelementen $P_1 ... P_n$, indem ein neues Netzelement $P_{n+1}$ zu der Gruppe von Netzelementen $P_l ... P_n$ hinzutritt oder indem ein Netzelement $P_v$ mit $1 \leq v \leq n$ die Gruppe von Netzelementen $P_1 ... P_n$ verläßt, eine Gruppenschlüsselerneuerung unter Verwendung des IKEv2-Protokolls durchgeführt wird, bei der ein aus der Gruppe von Netzelementen $P_l ... P_n$ ausgewähltes Netzelement $P_i^*$ mit $1 \leq i:\leq n$ einen neuen Gruppenschlüssel $GK_{neu}$ erzeugt und der neue Gruppenschlüssel $GK_{neu}$ von dem ausgewählten Netzelement $P_i$ an alle übrigen Netzelemente $P_k$ mit $1 \leq k \leq n+1$, $1 \leq k \leq n$, $k \neq i$, $k \neq v$ der Gruppe von Netzelementen $P_l ... P_n$ in der geänderten Zusammensetzung übertragen wird, indem das ausgewählte Netzelement $P_i^*$ mit allen übrigen Netzelementen $P_k$ einen Schlüsselaustausch nach dem Diffie-Hellman-Prinzip zum Übertragen des neuen Gruppenschlüssels $GK_{neu}$ ausführt, **dadurch gekennzeichnet, daß**

   - beim Hinzutreten des neuen Netzelementes $P_{n+1}$ zu der Gruppe von Netzelementen $P_l ... P_n$ der neue Gruppenschlüssel $GK_{neu}$ bei dem Schlüsselaustausch nach dem Diffie-Hellman-Prinzip mittels einer Nachricht der folgender Struktur übertragen wird:

   $M_{j5} (P_i \rightarrow P_1, P_2 ... P_{n+1}) : HDR, GK_{alt} \{ID_i, N_j\}, K_{il} \{VK_{alt}, GK_{neu}\},... , K_{in} \{ VK_{alt}, GK_{neu}\}, SK \{GK_{neu}, VK_{neu}, GSA, ID_i\}, GK_{neu} \{g^{rn+1}, ID_{n+1}\}$

   wobei ein erster Nachrichtenteil $GK_{alt} \{ID_i, N_j\}$, welcher mit einem vor dem neuen Gruppenschlüssel verwendeten, alten Gruppenschlüssel $GK_{alt}$, verschlüsselt ist, eine Identität $ID_i$ des Tokenhalters $PT$ und eine Zufallszahl

$N_i$ umfaßt,

wobei ein zweiter Nachrichtenteil $K_{il}$ { $VK_{alt}$, $GK_{neu}$}, ... , $K_{in}$ {$VK_{alt}$, $GK_{neu}$} den neuen Gruppenschlüssel $GK_{neu}$ und einen Zahlenwert für die Versionsnummer $VK_{alt}$ des alten Gruppenschlüssel $GK_{alt}$ umfaßt,

wobei ein dritter Nachrichtenteil $SK$ {$GK_{neu}$, $VK_{neu}$, $GSA$, $ID_i$), welcher mit einem Sitzungsschlüssel $SK$ verschlüsselt wird, den neuen Gruppenschlüssel $GK_{neu}$, einen Zahlenwert für die Versionsnummer $VK_{neu}$ des neuen Gruppenschlüssel $GK_{neu}$, eine Sicherheitsassoziation $GSA$ der Gruppe von Netzelementen $P_l$ ... $P_n$ sowie die Identität $ID_i$ des Tokenhalters $PT$ an das zu der Gruppe von Netzelementen $P_l$ ... $P_n$ hinzutretende, neue Netzelement $P_{n+1}$ übermittelt und

wobei ein vierter Nachrichtenteil $GK_{neu}$ {$g^{rn+1}$, $ID_{n+1}$, welcher mit dem neuen Gruppenschlüssel $GK_{neu}$ verschlüsselt wird, eine Identität $ID_{n+l}$ und einen öffentlichen Diffie-Hellman-Wert $g^{rn+1}$ des zu der Gruppe von Netzelementen $P_1$ ... $P_n$ hinzutretenden, neuen Netzelementes $P_{n+1}$ umfaßt, und daß

- beim Hinzutreten des neuen Netzelementes $P_{n+1}$ zu der Gruppe von Netzelementen $P_1$ ... $P_n$ vor der Gruppenschlüsselerneuerung eine Authentifizierung des neuen Netzelementes $P_{n+1}$ unter Verwendung des IKEv2-Protokolls durchgeführt wird und bei der Authentifizierung des neuen Netzelementes $P_{n+1}$ durch das ausgewählte Netzelement $P_i^{\bullet}$ die folgenden Nachrichten zwischen dem neuen Netzelement $P_{n+1}$ und dem ausgewählten Netzelement $P_i^*$ ausgetauscht werden:

$M_{JI}(P_{i\to} P_{n+l})$: $HDR$, $\alpha^{ri}$, $SA_i$, $NA_i$
$M_{J2}(P_{n+1}\to P_i)$ : $HDR$, $\alpha^{rn+1}$, $SA_{n+1}$, $NA_{n+1}$
$M_{J3}(P_i \to P_{n+1})$ : $HDR$, $SK$ {$ID_i$, $CERT_i$, $SIG_i$, $ID_1$, $ID_2$... $ID_n$, $G^{rl}$, $g^{r2}$...,$g^{rn}$}
$M_{j4}(P_{n+1} \to P_i)$ : $HDR$, $SK$ {$ID_{n+1}$, $CERT_{n+1}$, $SIG_{n+1}$, $g^{rn+1}$}

wobei $HDR$ Kopfdaten, $CERT$ ein Zertifikat eines öffentlichen RSA-Schlüssels, $SIG$ die digitale Signatur, $g^r$ ein öffentlicher Diffie-Hellman-Wert zum Erzeugen eines zeitweiligen sicheren Übertragungskanals $K$ und $a^r$ ein öffentlicher Wert zum Erzeugen eines Sitzungsschlüssels $SK$ sind, $SK${M} eine Verschlüsselung der Nachricht $M$ unter Verwendung eines Verschlüsselungsschlüssels $SK_e$ und eine Authentifizierung unter Verwendung eines Authentisierungsschlüssels $SK_\alpha$ anzeigen und mit den Nachrichten $M_{JI}$ und $M_{j2}$ eine Sicherheitsassoziation $SA$ ausgehandelt wird.

2. Verfahren nach Anspruch 1, **dadurch gekennzeichnet, daß** bei der Gruppenschlüsselerneuerung das ausgewählte Netzelement $P_i^{\bullet}$ bestimmt wird, indem unter Verwendung eines Token-Protokolls ein virtueller Token an ein Netzelement $P_i$ mit $1 \leq i \leq n$ aus der Gruppe von Netzelementen $P_1$ ... $P_n$ vergeben wird und so das Netzelement $P_i$ zu einem Tokenhalter $PT$ wird.

3. Verfahren nach Anspruch 1, **dadurch gekennzeichnet, daß** bei der Gruppenschlüsselerneuerung das ausgewählte Netzelement $P_i^{\bullet}$ bestimmt wird, indem unter Verwendung eines Token-Protokolls ein physischer Token an ein Netzelement $P_i$ mit $1 \leq i \leq n$ aus der Gruppe von Netzelementen $P_l$ ... $P_n$ vergeben wird und so das Netzelement $P_i$ zu einem Tokenhalter $PT$ wird.

4. Verfahren nach Anspruch 2 oder 3, **dadurch gekennzeichnet, daß** die Tokenvergabe für weitere Gruppenschlüsselerneuerungen jeweils erneut durchgeführt wird.

5. Verfahren nach Anspruch 2, **dadurch gekennzeichnet, daß** bei Verwendung des virtuellen Tokens der Tokenhalter $PT$ aus der Gruppe von Netzelementen $P_l$ ... $P_n$ gemäß der folgenden Beziehung ermittelt wird

$$PT = VK \bmod n,$$

wobei $VK$ einen Zahlenwert für eine Versionsnummer des bei der Gruppenschlüsselerneuerung erzeugten neuen Gruppenschlüssels $GK_{neu}$ bezeichnet und bei jeder Gruppenschlüsselerneuerung um den Wert 1 erhöht wird.

6. Verfahren nach einem der vorangehenden Ansprüche, **dadurch gekennzeichnet, daß** die Authentifizierung des

neuen Netzelementes $P_{n+1}$ durch das ausgewählte Netzelement $P_i^*$ ausgeführt wird.

7. Verfahren nach einem der vorangehenden Ansprüche, **dadurch gekennzeichnet, daß** die Authentifizierung des neuen Netzelementes $P_{n+1}$ mittels digitaler Signatur ausgeführt wird.

8. Verfahren nach einem der vorangehenden Ansprüche, **dadurch gekennzeichnet, daß** bei erfolgreicher Authentifizierung das ausgewählte Netzelement $P_i^*$ für alle übrigen Netzelemente $P_k$ der Gruppe von Netzelementen $P_l$ ... $P_n$ einen jeweiligen öffentlichen Diffie-Hellman-Wert g' mit $1 \leq 1 \leq n$ an das neue Netzelement $P_{n+1}$ übergibt und daß das neue Netzelement $P_{n+1}$ seinen öffentlichen Diffie-Hellman-Wert $g^{n+1}$ an das ausgewählte Netzelement $P_i^*$ übergibt, welches seinerseits den öffentlichen Diffie-Hellman-Wert $g^{n+1}$ des neuen Netzelementes $P_{n+1}$ an alle übrigen *Netzelemente $P_k$* der Gruppe von Netzelementen $P_l$ ... $P_n$ übergibt.

9. Verfahren nach einem der vorangehenden Ansprüche, **dadurch gekennzeichnet, daß** beim Verlassen des Netzelementes $P_v$ die Gruppenschlüsselerneuerung in analoger Weise wie beim Hinzutreten des neuen Netzelementes $P_{n+1}$ durchgeführt wird.

10. Verfahren nach Anspruch 9, **dadurch gekennzeichnet, daß** beim Verlassen des Netzelementes $P_v$ alle übrigen Netzelemente $P_x$ mit $1 \leq x \leq n$, $x \neq v$ der Gruppe von Netzelementen $P_l$ ... $P_n$ in der geänderten Zusammensetzung jeweils einen öffentlichen Diffie-Hellman-Wert $g^v$ des die Gruppe von Netzelementen $P_1$ ... $P_n$ verlassenden Netzelementes $P_v$ löschen.

11. Verfahren nach einem der vorangehenden Ansprüche, **dadurch gekennzeichnet, daß** der neue Gruppenschlüssel $GK_{neu}$ bei einer Datenkommunikation zwischen den mehreren Netzelementen $P_i$ in dem Netzwerksystem zum Austauschen von Video- und / oder Audio- und / oder Textdaten verwendet wird.

12. Verfahren einem der vorangehenden Ansprüche, **dadurch gekennzeichnet, daß** der neue Gruppenschlüssel $GK_{neu}$ über separate geheime Übertragungskanäle verteilt wird, die mittels eines geheimen Schlüssels $K_{ij}$ definiert sind und sich zwischen zwei Netzelementen $P_i$; $P_j$ wie folgt berechnet werden:

$$K_{ij-e} = H(g^{r_i j_i}, g^{r_i r_j} \Big| N_i \Big| ID_i \Big| ID_j \Big| 0)$$

$$K_{ij-a} = H(g^{r_i j_i}, g^{r_i r_j} \Big| N_i \Big| ID_i \Big| ID_j \Big| 1) \qquad (j=1, 2, \ldots n \text{ und } j \neq i),$$

wobei $j$=1, 2, ... $n$ *und* $j \neq i$ gilt.

**Claims**

1. Method for changing a group key $GK$ for a secure data exchange in a group of network elements $P_1$... $P_n$ *with n =* 2, 3, ... in a network system having a closed peer-to-peer configuration and a virtual synchrony supporting group communication protocol in a communication layer of a system architecture of the network system, wherein in the case of a change in a composition of the group of network elements $P_1$... $P_n$ caused by the join of a new network element $P_{n+1}$ into the group of network elements $P_1$ ...$P_n$ or by the leave of a network element $P_v$ with $1 \leq v \leq n$ from the group of network elements $P_1$... $P_n$, a group key renewal is carried out using the IKEv2 protocol, in which a network element $P_i^*$ with $1 \leq i \leq n$ selected from the group of network elements $P_1$... $P_n$ generates a new group key $GK_{neu}$ and the new group key $GK_{neu}$ is transferred from the selected network element $P_i$ to all the remaining network elements $P_k$ with $1 \leq k \leq n+1$, $1 \leq k \leq n$, $k \neq i$, $k \neq v$ of the group of network elements $P_1$ ... $P_n$ in the changed composition, which the selected network element $P_i^*$ achieves by carrying out a key exchange with all the remaining network elements $P_k$ in accordance with the Diffie-Hellman principle, in order to transfer the new group key $GK_{neu}$, **characterized in that**, when the new network element $P_{n+1}$ joins the group of network elements $P_1$ ... $P_n$, the new group key $GK_{neu}$ is transferred during key exchange according to the Diffie-Hellman principle by means of a message having the following structure:

$$M_{j5} P_i \to P_1, P_2 \dots P_{n+1}) : HDR, GK_{alt} \{ID_i\ N_i\}, K_{il} \{VK_{\alpha lt},\ GK_{neu}\}, \dots ,$$
$$K_{in} \{ VK_{alt},\ GK_{neu}\}, SK \{GK_{neu},\ VK_{new}\ GSA,\ ID_i\}, GK_{neu} \{g^{rn+1}, ID_{n+i}\}$$

wherein a first message part $GK_{alt} \{ID_i, N_i\}$, which is encrypted with an old group key $GK_{alt}$ used prior to the new group key, comprises an identity $ID_i$ of the token holder $PT$ and a random number $N_i$;

wherein a second message part $K_{il} \{ VK_{alt}, GK_{neu}\}, \dots , K_{in} \{VK_{alt}, GK_{neu}\}$ comprises the new group key $GK_{neu}$ and a numerical value for the version number $VK_{alt}$ of the old group key $GK_{alt}$;

wherein a third message part $SK \{GK_{neu}, VK_{neu}, GSA, ID_i\}$, which is encrypted with a session key $SK$, transfers the new group key $GK_{neu}$, a numerical value for the version number $VK_{neu}$ of the new group key $GK_{neu}$, a security association $GSA$ of the group of network elements $P_1 \dots P_n$ and the identity $ID_i$ of the token holder $PT$ to the new network element $P_{n+1}$ joining the group of network elements $P_1 \dots P_n$; and

wherein a fourth message part $GK_{neu} \{g^{rn+1}, ID_{n+1}\}$, which is encrypted with the new group key $GK_{neu}$, comprises an identity $ID_{n+1}$ and a public Diffie-Hellman value $g^{rn+1}$ of the new network element $P_{n+1}$ joining the group of network elements $P_1 \dots P_n$

- when the new network element $P_{n+1}$ joins the group of network elements $P_1 \dots P_n$, an authentication of the new network element $P_{n+1}$ is carried out using the IKEv2 protocol prior to the group key renewal, and the following messages are exchanged between the new network element $P_{n+1}$ and the selected network element

$P_i^*$ during the authentication of the new network element $P_{n+1}$ by the selected network element $P_i^*$:

$$M_{J1}(P_i \to P_{n+1}) : HDR, a^{ri}, SA_i, NA_i$$
$$M_{J2}(P_{n+1} \to P_i) : HDR, a^{rn+1}, SA_{n+1}, NA_{n+1}$$
$$M_{J3}(P_i \to P_{n+1}) : HDR, SK \{ID_i, CERT_i, SIG_i, ID_1, ID_2 \dots ID_n, g^{rl}, g^{r2} \dots g^{rn}\}$$
$$M_{J4}(P_{n+1} \to P_i) HDR, SK \{ID_{n+1}, CERT_{n+1}, SIG_{n+1}, g^{rn+1}\}$$

where $HDR$ are head data, $CERT$ is a certificate of a public RSA key, $SIG$ is the digital signature, $g^r$ is a public Diffie-Hellman value for generating a temporary secure transfer channel $K$ and $a^r$ is a public value for generating a session key $SK$;

where $SK\{M\}$ indicates an encryption of the message $M$ using an encryption key $SK_e$ and an authentication using an authentication key $SK_a$; and

where a security association $SA$ is negotiated with the messages $M_{Jl}$, and $M_{J2}$.

2. Method according to Claim 1, **characterized in that**, in order to determine the selected network element $P_i^*$ during the group key renewal, a virtual token is assigned to a network element $P_i$ ($1 \le i \le n$) from the group of network elements $P_1 \dots P_n$ with the use of a token protocol, with the network element $P_i$ thus becoming a token holder $PT$.

3. Method according to Claim 1, **characterized in that**, in order to determine the selected network element $P_i^*$ during the group key renewal, a physical token is assigned to a network element $P_i$ ($1 \le i \le n$) from the group of network elements $P_1 \dots P_n$ with the use of a token protocol, with the network element $P_i$ thus becoming a token holder $PT$.

4. Method according to Claim 2 or 3, **characterized in that**, for further group key renewals, the token assignment is carried out again in each case.

5. Method according to Claim 2, **characterized in that**, when using the virtual token, the token holder $PT$ is determined from a group of network elements $P_1 \dots P_n$ according to the following relation

$$PT = VK \bmod n,$$

where $VK$ indicates a numerical value for a version number of the new group key $GK_{neu}$ generated during the group key renewal and is increased by the value of 1 in each group key renewal.

**6.** Method according to any one of the preceding Claims, **characterized in that** the authentication of the new network element $P_{n+1}$ is carried out by the selected network element $P_i^*$.

**7.** Method according to any one of the preceding Claims, **characterized in that** the authentication of the new network element $P_{n+1}$ is carried out by means of digital signature.

**8.** Method according to any one of the preceding Claims, **characterized in that,** in the case of a successful authentication, the selected network element $P_i^*$ transfers a respective public Diffie-Hellman value $g^i$ $(1 \le i \le n)$ to the new network element $P_{n+1}$ for all the remaining network elements $P_k$ of the group of network elements $P_1 \ldots P_n$, and **in that** the new network element $P_{n+1}$ transfers its public Diffie-Hellman value $g^{n+1}$ to the selected network element $P_i^*$, which itself transfers the public Diffie-Hellman value $g^{n+1}$ of the new network element $P_{n+1}$ to all the remaining network elements $P_k$ of the group of network elements $P_1 \ldots P_n$.

**9.** Method according to any one of the preceding Claims, **characterized in that**, upon leaving of a network element $P_v$, the group key renewal is carried out analogously to the joining of the new network element $P_{n+1}$.

**10.** Method according to Claim 9, **characterized in that**, upon leaving of the network element $P_v$, all the remaining network elements $P_x$ $(1 \le x \le n, x \ne v)$ of the group of network elements $P_1 \ldots P_n$ in the changed composition delete a public Diffie-Hellman value $g^v$ of the network element $P_v$ leaving the group of network elements $P_1 \ldots P_n$ in each case.

**11.** Method according to any one of the preceding Claims, **characterized in that** the new group key $GK_{neu}$ is used in data communication between the several network elements $P_i$ in the network system for exchanging video and / or audio and /or text data.

**12.** Method according to any one of the preceding Claims, **characterized in that** the new group key $GK_{neu}$ is distributed by means of separate secret transfer channels, which are defined by means of a secret key $K_{ij}$, which is calculated between the two network elements $P_i$, $P_j$ as follows:

$$K_{ij\text{-}e} = H\,(g^{r_i j_i},\, g^{r_i r_j} \mid N_i \mid ID_i \mid ID_j \mid 0)$$

$$K_{ij\text{-}a} = H\,(g^{r_i j_i},\, g^{r_i r_j} \mid N_i \mid ID_i \mid ID_j \mid 1) \qquad (j = 1, 2, \ldots n \text{ and } j \ne i)$$

wherein $j = 1, 2 \ldots n$ and $j \ne i$.

**Revendications**

**1.** Procédé de modification d'une clé de groupe $GK$ pour un échange de données sécurisé dans un groupe d'éléments de réseau $P_1 \ldots P_n$ avec $n = 2, 3, \ldots$ dans un système de réseau avec une configuration poste à poste fermée et un protocole de communication de groupe supportant une synchronisation virtuelle dans une couche de communication d'une architecture système du système de réseau, étant donné qu'en cas de modification d'une composition du groupe d'éléments de réseau $P_1 \ldots P_n$ par l'entrée d'un nouvel élément de réseau $P_{n+1}$ dans le groupe d'éléments de réseau $P_1 \ldots P_n$ ou la sortie d'un élément de réseau $P_v$ avec $1 \le v \le n$ du groupe d'éléments de réseau $P_1 \ldots P_n$, un renouvellement de la clé de groupe est effectué en utilisant le protocole IKEv2, renouvellement au cours duquel un élément de réseau $P_i^*$ avec $1 \le i \le n$ sélectionné dans le groupe d'éléments de réseau $P_1 \ldots P_n$ crée une nouvelle clé de groupe $GK_{nouv}$ et la nouvelle clé de groupe $GK_{nouv}$ est transmise par l'élément de réseau $P_i$ sélectionné à tous les éléments de réseau restants $P_k$ avec $1 \le k \le n+1$, $1 \le k \le n$, $k \ne i$, $k \ne v$ du groupe d'éléments de réseau $P_1 \ldots P_n$ avec la composition modifiée, l'élément de réseau $P_i^*$ sélectionné réalisant un échange de clé avec tous les éléments de réseau restants $P_k$ selon le principe Diffie-Hellman pour la transmission de la nouvelle clé de groupe $GK_{nouv}$, **caractérisé en ce que**

- à l'entrée du nouvel élément de réseau $P_{n+1}$ dans le groupe d'éléments de réseau $P_1 \ldots P_n$, la nouvelle clé de groupe $GK_{nouv}$ est transmise lors de l'échange de clé selon le principe Diffie-Hellman au moyen d'un message de structure suivante :

$M_{j5}(P_i \rightarrow P_1, P_2 ... P_{n+1})$ : HDR, $GK_{anc}$ {$ID_i$, $N_i$}, $K_{il}$ {$VK_{anc}$, $GK_{nouv}$}, ..., $K_{in}$ {$VK_{anc}$, $GK_{nouv}$}, SK {$GK_{nouv}$, $VK_{nouv}$, GSA, $ID_i$}, $GK_{nouv}$ {$g^{rn+1}$, $ID_{n+1}$})

étant donné qu'une première partie de message $GK_{anc}$ {$ID_i$, $N_i$}, qui est chiffrée par une ancienne clé de groupe $GK_{anc}$ utilisée avant la nouvelle clé de groupe, comprend une identité $ID_i$ du support de jeton $PT$ et un nombre aléatoire $N_i$,

étant donné qu'une deuxième partie de message $K_{il}$ {$VK_{anc}$, $GK_{nouv}$},... , $K_{in}$ {$VK_{anc}$, $GK_{nouv}$} comprend la nouvelle clé de groupe $GK_{nouv}$ et une valeur numérique pour le numéro de version $VK_{anc}$ de l'ancienne clé de groupe $GK_{anc}$,

étant donné qu'une troisième partie de message SK {$GK_{nouv}$, $VK_{nouv}$, GSA, $ID_i$}, qui est chiffrée par une clé de session SK, communique la nouvelle clé de groupe $GK_{nouv}$, une valeur numérique pour le numéro de version $VK_{nouv}$ de la nouvelle clé de groupe $GK_{nouv}$, une association de sécurité GSA du groupe d'éléments de réseau $P_1 ... P_n$ ainsi que l'identité $ID_i$ du support de jeton $PT$ au nouvel élément de réseau $P_{n+1}$ entrant dans le groupe d'éléments de réseau $P_1 ... P_n$ et .

étant donné qu'une quatrième partie de message $GK_{nouv}$ {$g^{rn+1}$, $ID_{n+1}$}, qui est chiffrée par la nouvelle clé de groupe $GK_{nouv}$, comprend une identité $ID_{n+1}$ et une valeur Diffie-Hellman publique $g^{n+1}$ du nouvel élément de réseau $P_{n+1}$ entrant dans le groupe d'éléments de réseau $P_1 ... P_n$, et **en ce que**
- à l'entrée du nouvel élément de réseau $P_{n+1}$ dans le groupe d'éléments de réseau $P_l ... P_n$, avant le renouvellement de la clé de groupe, une authentification du nouvel élément de réseau $P_{n+1}$ est effectuée en utilisant le protocole IKEv2 et, lors de l'authentification du nouvel élément de réseau $P_{n+1}$ par l'élément de réseau $P_i^*$ sélectionné, les messages suivants sont échangés entre le nouvel élément de réseau $P_{n+1}$ et l'élément de réseau $P_i^*$ sélectionné :

$M_{j1}(P_i \rightarrow P_{n+1})$: HDR, $a^{ri}$, $SA_i$, $NA_i$
$M_{J2}(P_{n+1} \rightarrow P_i)$ : HDR, $a^{rn+1}$, $SA_{n+1}$, $NA_{n+1}$
$M_{J3}(P_i \rightarrow P^{n+1})$ : HDR, SK {$ID_i$, $CERT_i$, $SIG_i$, $ID_1$, $ID_2$... $ID_n$, $G^{r1}$, $g^{r2}...g^{rn}$}
$MJ_4(P_{n+1} \rightarrow P_i)$ : HDR, SK {$ID_{n+1}$, $CERT_{n+1}$, $SIG_{n+1}$, $g^{rn+1}$}

étant donné que HDR sont les données d'en-tête, CERT est un certificat d'une clé RSA publique, SIG est la signature numérique, $g^r$ est une valeur Diffie-Hellman publique pour la création d'un canal de transmission temporaire sécurisé K et $a^r$ est une valeur publique pour la création d'une clé de session SK, SK{M} indique un chiffrement du message M en utilisant une clé de chiffrement $SK_e$ et une authentification en utilisant une clé d'authentification $SK_a$, et une association de sécurité SA est négociée avec les messages $M_{J1}$ et $M_{J2}$.

2. Procédé selon la revendication 1, **caractérisé en ce que** l'élément de réseau $P_i^*$ sélectionné est déterminé lors du renouvellement de la clé de groupe, un jeton virtuel étant attribué à l'aide d'un protocole à jeton à un élément de réseau $P_i$ avec $1 \leq i \leq n$ du groupe d'éléments de réseau $P_1 ... P_n$ de sorte que l'élément de réseau $P_i$ devienne un support de jeton $PT$.

3. Procédé selon la revendication 1, **caractérisé en ce que** l'élément de réseau $P_i^*$ sélectionné est déterminé lors du renouvellement de la clé de groupe, un jeton physique étant attribué à l'aide d'un protocole à jeton à un élément de réseau $P_i^*$ avec $1 \leq i \leq n$ du groupe d'éléments de réseau $P_1 ... P_n$ de sorte que l'élément de réseau $P_i$ devienne un support de jeton $PT$.

4. Procédé selon la revendication 2 ou 3, **caractérisé en ce que** l'attribution du jeton est effectuée de nouveau pour chaque renouvellement de la clé de groupe.

5. Procédé selon la revendication 2, **caractérisé en ce que**, lors de l'utilisation du jeton virtuel, le support de jeton $PT$ est identifié dans le groupe d'éléments de réseau $P_1 ... P_n$ selon la relation suivante

$$PT = VK \bmod n,$$

où VK désigne une valeur numérique pour un numéro de version de la nouvelle clé de groupe $GK_{nouv}$ créée lors du renouvellement de la clé de groupe et est augmenté de la valeur 1 à chaque renouvellement de la clé de groupe.

6. Procédé selon l'une quelconque des revendications précédentes, **caractérisé en ce que** l'authentification du nouvel élément de réseau $P_{n+1}$ est réalisée par l'élément de réseau $P_i^*$ sélectionné.

**7.** Procédé selon l'une quelconque des revendications précédentes, **caractérisé en ce que** l'authentification du nouvel élément de réseau $P_{n+1}$ est réalisée au moyen d'une signature numérique.

**8.** Procédé selon l'une quelconque des revendications précédentes, **caractérisé en ce que**, lorsque l'authentification est réussie, l'élément de réseau $P_i^*$ sélectionné transfère une valeur Diffie-Hellman publique $g^i$ correspondante avec $1 \leq i \leq n$ au nouvel élément de réseau $P_{n+1}$ pour tous les éléments de réseau restants $P_k$ du groupe d'éléments de réseau $P_1....P_n$ et **en ce que** le nouvel élément de réseau $P_{n+1}$ transfère sa valeur Diffie-Hellman publique $g^{n+1}$ à l'élément de réseau sélectionné $P_i^*$, qui pour sa part transfère la valeur Diffie-Hellman publique $g^{n+1}$ du nouvel élément de réseau $P_{n+1}$ à tous les éléments de réseau restants $P_k$ du groupe d'éléments de réseau $P_1... P_n$.

**9.** Procédé selon l'une quelconque des revendications précédentes, **caractérisé en ce que**, à la sortie de l'élément de réseau $P_v$, le renouvellement de la clé de groupe se fait de manière analogue à celui effectué à l'entrée du nouvel élément de réseau $P_{n+1}$.

**10.** Procédé selon la revendication 9, **caractérisé en ce que**, à la sortie de l'élément de réseau $P_v$, tous les éléments de réseau restants $P_x$ avec $1 \leq x \leq n$, $x \neq v$ du groupe d'éléments de réseau $P_1 ... P_n$ selon la composition modifiée suppriment chacun une valeur Diffie-Hellman publique $g^v$ de l'élément de réseau $P^v$ quittant le groupe d'éléments de réseau $P_1 ... P_n$.

**11.** Procédé selon l'une quelconque des revendications précédentes, **caractérisé en ce que** la nouvelle clé de groupe $GK_{nouv}$ est utilisée lors d'une transmission de donnés entre les éléments de réseau $P_i$ dans le système de réseau pour l'échange de données vidéo et/ou audio et/ou de textes.

**12.** Procédé selon l'une quelconque des revendications précédentes, **caractérisé en ce que** la nouvelle clé de groupe $GK_{nouv}$ est répartie sur des canaux de transmission secrets séparés définis au moyen d'une clé secrète $K_{ij}$ et calculés entre deux éléments de réseau $P_i$, $P_j$ comme suit :

$$K_{ij\text{-}e} = H(g^{r_i j_i,}\, g^{r_i r_j}\, |N_i|ID_i|ID_j|0)$$

$$K_{ij\text{-}a} = H(g^{r_i j_i,}\, g^{r_i r_j}\, |N_i|ID_i|ID_j|1) \quad (j=1, 2, ... n \text{ et } j \neq i),$$

où $j=1$, 2, ... $n$ et $j \neq i$.

Fig.1

Tabelle der DH-Geheimnisse von $P_4$

| Liste der Gruppenmitglieder | Öffentliche DH-Werte | DH-Geheimnisse |
|---|---|---|
| $P_1$ | $g^{r1}$ | $g^{r4r1}$ |
| $P_2$ | $g^{r2}$ | $g^{r4r2}$ |
| $P_3$ | $g^{r3}$ | $g^{r4r3}$ |
| $P_4$ | $g^{r4}$ | - |

**Tokenhalter**

**Gruppe**

Tabelle der DH-Geheimnisse von $P_3$

| Liste der Gruppenmitglieder | Öffentliche DH-Werte | DH-Geheimnisse |
|---|---|---|
| $P_1$ | $g^{r1}$ | $g^{r3r1}$ |
| $P_2$ | $g^{r2}$ | $g^{r3r2}$ |
| $P_3$ | $g^{r3}$ | - |
| $P_4$ | $g^{r4}$ | $g^{r3r4}$ |

Tabelle der DH-Geheimnisse von $P_1$

| Liste der Gruppemitglieder | Öffentliche DH-Werte | DH-Geheimnisse | Zeitweilige sichere Kanäle |
|---|---|---|---|
| $P_1$ | $g^{r1}$ | - | - |
| $P_2$ | $g^{r2}$ | $g^{r1r2}$ | $K_{12}$ |
| $P_3$ | $g^{r3}$ | $g^{r1r3}$ | $K_{13}$ |
| $P_4$ | $g^{r4}$ | $g^{r1r4}$ | $K_{14}$ |

$K_{14}$

$K_{13}$

$K_{12}$

$P_1$ $P_2$ $P_3$ $P_4$

**Zeitweiliger sicherer Kanal**

Tabelle der DH-Geheimnisse von $P_2$

| Liste der Gruppenmitglieder | Öffentliche DH-Werte | DH-Geheimnisse |
|---|---|---|
| $P_1$ | $g^{r1}$ | $g^{r2r1}$ |
| $P_2$ | $g^{r2}$ | - |
| $P_3$ | $g^{r3}$ | $g^{r2r3}$ |
| $P_4$ | $g^{r4}$ | $g^{r2r4}$ |

Fig.2

EP 1 793 525 B1

Position des virtuellen
Tokens

| P₁ | P₂ | · · · | Pᵢ | · · · | Pₙ |

(MJ₁~MJ₄)    IKEv₂

○ Pₙ₊₁

Authentifizierung

$$\Longrightarrow$$
Beitritt Pₙ₊₁

MJ₅    MJ₅

MJ₅    MJ₅

| P₁ | P₂ | · · · | Pᵢ | · · · | Pₙ | Pₙ₊₁ |

MJ₅    MJ₅

Schlüsselerneuerung

Fig.3

Position des virtuellen
Tokens

| P₁ | P₂ | · · · | Pᵢ | · · · | Pₙ | Pₙ₊₁ |

$$\Longrightarrow$$
Austritt Pₙ₊₁

ML₁

ML₁    ML₁

| P₁ | P₂ | · · · | Pᵢ | · · · | Pₙ |

ML₁    ML₁

Schlüsselerneuerung

Fig.4

Fig.5

Fig.6

**EP 1 793 525 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **M. STEINER et al.** CLIQUES: A new approach to group key agreement. *IEEE International Conference on Distributed Computing Systems,* 1998, 380-397
- Simple and fault-tolerant key agreement for dynamic collaborative groups. **Y. KIM et al.** 7th ACM Conference on Computer and Communications Security. ACM Press, November 2000, 235-244
- **L. DONDETI et al.** Disec: A distributed framework for scalable secure manyto-many communication. *Proceedings of The Fifth IEEE Symposium on Computers and Communications (ISCC 2000,* Juli 2000
- **O. RODEH et al.** Optimized Group Rekey for Group Communications Systems. *Symposium Network and Distri-buted System Security (NDSS,* Februar 2000, 39-48
- **C. WONG et al.** Secure group communication using key graphs. *IEEE/ACM Transaction on Networking,* 2000, vol. 8 (1), 16-30
- **VON FUWEN LIU et al.** Efficient key distribution for closed meetings in the internet. *International Conference for Communications and Multimedia Security*
- CMS 2005, 19. bis 21. September 2005, Proceedings. Lecture Notes in Computer Science. Springer-Verlag Berlin, 2005, vol. 3677
- **B. WHETTEN et al.** A High Performance Totally Ordered Multicast Protocol. In Theory and Practice in Distributed Systems, International Workshop. *Lecture Notes in Computer Science 938,* September 1994, 33-57
- Totem: A Reliable Ordered Delivery Protocol for Interconnected Local Area Networks. **D. A. AGARWAL.** Ph.D Thesis. University of Santa Barbara, Dezember 1994

- Consistency Support for a Decentralized Management in Closed Multiparty Conferences Using SIP. **E. C. POPOVICI et al.** Proc. of the 11th IEEE International Conference on Networks (ICON 2003. IEEE Press, 2003, 295-300
- **M. ZUEHLKE et al.** A Signaling Protocol for Small Closed Dynamic Multi-peer Groups. *High Speed Networks and Multimedia Communications (HSNMC 2004,* 2004, 973-984
- **E. RESCORLA.** Diffie-Hellman Key Agreement Method. *RFC 2631,* Juni 1999
- **H. KRAWCZYK et al.** HMAC: Keyed-Hashing for Message Authentication. *RFC 2104,* Februar 1997
- **D. HARKINS et al.** The Internet Key Exchange (IKE. *RFC2409,* November 1998
- **W. AIELLO et al.** *Just Fast Keying (JFK,* Juli 2002, draft-ietf-ipsec-jfk-04.txt
- **C. KAUFMAN.** *Internet Key Exchange (IKEv2) Protocol,* April 2003, draft-ietf-ipsec-ikev2-07.txt
- **C. KAUFMAN.** *Internet Key Exchange (IKEv2) Protocol,* April 2003, draft-ietf ipsec-ikev2-07.txt
- **A. J. MENEZES et al.** Handbook of applied cryptography, CRC Press series on discrete mathematics and its applications. CRC Press, 1997
- **O. RODEH et al.** Optimized Group Rekey for Group Communication Systems. *Symposium Network and Distri-buted System Security (NDSS,* Februar 2000, 39-48
- Simple and fault-tolerant key agreement for dynamic collaborative groups. **Y. KIM et al.** 7th ACM Conference on Computer and Communications Security. ACM Press, November 2000, 235-244